(19) Europäisches Patentamt
European Patent Office
Office européen des brevets

(11) Publication number: **0 181 421**
**B1**

(12) # EUROPEAN PATENT SPECIFICATION

(45) Date of publication of patent specification: **27.07.88**

(51) Int. Cl.$^4$: **A 23 L 1/227,** A 23 L 1/228, A 23 L 1/229

(21) Application number: **84307770.2**

(22) Date of filing: **09.11.84**

(88) **A request pursuant to Rule 88 EPC for correction of the description and the claims was filed on 18.10.1985.**

(54) **Flavor enhancing seasonings and foods containing them.**

(43) Date of publication of application:
**21.05.86 Bulletin 86/21**

(45) Publication of the grant of the patent:
**27.07.88 Bulletin 88/30**

(84) Designated Contracting States:
**DE FR GB**

(56) References cited:
**GB-A- 916 284**
**US-A-3 214 276**
**US-A-3 940 500**
**CHEMICAL ABSTRACTS, vol. 76, no. 25, 19th June 1972, page 340, no. 152284c, Columbus, Ohio, US; K. YASUMOTO et al.: "Shiitake flavor. I. New sulfur-containing peptide from Lentinus edodes acting as a precursor for lenthionine"**
**CHEMICAL ABSTRACTS, vol. 77, no. 5, 31st July 1972, page 394, no. 32955w, Columbus, Ohio, US; S. SINGH et al.: "Cheese flavor development using direct acidified curd"**
**FENAROLI'S HANDBOOK OF FLAVOUR INGREDIENTS 2ND EDITION VOL. 1, P. 239. (C.R.C. PRESS, CHIC., U.S.A.)**

(73) Proprietor: **AJINOMOTO CO., INC.**
**5-8, Kyobashi 1-chome, Chuo-ku**
**Tokyo 104 (JP)**

(72) Inventor: **Kimizuka, Akimitsu**
**No. 2228-73, Kamariya-cho Kanazawa-ku**
**Yokohama-shi Kanagawa-ken (JP)**
Inventor: **Sakaguchi, Makoto**
**No. 2-89, Shinmei-cho Saiwai-ku**
**Kawasaki-shi Kanagawa-ken (JP)**
Inventor: **Miyajima, Ryuichi**
**No. 547-129, Shirane-cho Asahi-ku**
**Yokohama-shi Kanagawa-ken (JP)**
Inventor: **Ueda, Youichi**
**No. 2-20-8, Kannon Kawasaki-ku**
**Kawasaki-shi Kanagawa-ken (JP)**
Inventor: **Mori, Norikazu**
**No. 2-2-29, Higashinagaya Kounan-ku**
**Yokohama-shi Kanagawa-ken (JP)**

(74) Representative: **Armitage, Ian Michael et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 181 421 B1**

Courier Press, Leamington Spa, England.

**Description**

This invention relates to seasoning and food having enhanced flavor by the addition of sulfur-containing compounds.

The taste intensity imparting function of representative "Umami" substances, namely, sodium L-glutamate (MSG), sodium 5'-inosinate (IMP) and sodium 5'-guanylate (GMP) is widely known. A wide variety of seasonings obtained from MSG, IMP and GMP can be appropriately combined with protein hydrolysates (HVP, HAP), yeast extract (YE), amino acids etc. In their various application, these substances have been increasingly used for the purpose of enhancing organoleptic characteristics of foods such as the "Umami" (MSG like taste) flavor etc.

Although "Umami" substances enjoy popularity and wide application, there has still been a demand for extending their function; to further develop their flavor characteristics. More specifically, there has still been a demand to further develop the thickness, amplitude, continuity etc. of "Umami" substances. This is a property which is different from their taste which is the effect achieved by a combination of saltiness, sweetness, acid taste etc. as is done to further enhance a taste.

Hence, throughout this text the term taste is used to describe the basic saltiness, sweetness and acidity properties of the "Umami" substances described above. The term flavor is used to describe the thickness, amplitude and continuity properties of "Umami" substances. The terms taste and flavor do not describe the same properties. Rather they describe different properties which can be complementary.

According to the present invention, there is provided a composition comprising:

i) a taste intensifying umami substance; and

ii) a flavour enhancing substance which is at least one member selected from glutathione, salts of glutathione, oxidized glutathione, salts of oxidized glutathione, glutathione sulfonic acid, salts of glutathione sulfonic acid, cycloalliin, salts of cycloalliin, lentinic acid, salts of lentinic acid, des-glutamyl lentinic acid, salts of des-glutamyl lentinic acid, methionine methyl sulfonium, salts of methionine methyl sulfonium compounds of the formulae

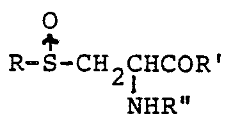

(1)

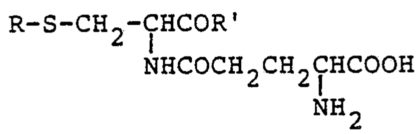

(2)

wherein R is a saturated or unsaturated aliphatic hydrocarbon group of from 1 to 4 carbon atoms or a carboxyalkyl group wherein said alkyl is from 1 to 6 carbon atoms; or, in formula (2), H when R' is OH,

R' is OH, a carboxymethyl amino group or a salt of a carboxymethyl amino group, and

R'' is H, a γ-glutamyl group or a salt of a γ-glutamyl group,

salts of compound (1) and salts compound (2), wherein the taste intensifying umami substance and the flavour enhancer are present in relative amounts such that a synergistic effect occurs between the two substances to enhance flavour intensity.

Part of compounds (1) and (2) shown above were known as precursor substances for specific taste components in food in which these are present. Other parts of compounds (1) and (2) are presumed to be present in the metabolism route in foods, but not reference has been made to their relation to flavor intensity. Further, it is impossible to guess what flavor intensifying function these compounds manifest in the presence of the Umami components.

It has now been discovered that GSH, GSSG, $GSO_3H$, CA, LA, MMS and compounds of the general formulae (1) and (2) shown below

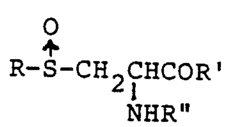

(1)

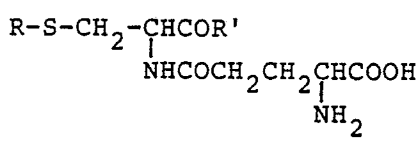

(2)

wherein R is a saturated or unsaturated aliphatic hydrocarbon group of 1 to 4 carbon atoms or a carboxyalkyl group wherein the alkyl group is from $C_1$ to $C_6$; or, in formula (2), H when R' is OH,

R' is OH or a carboxymethylamino group, and

R'' is H or a γ-glutamyl group

manifest strong flavor enhancement in the presence of MSG, a nucleic acid type taste intensifying substance or a mixture thereof. As the result of a detailed study on various combinations and formulations of glutamic acid, glutamic acid salts or nucleic acid type taste intensifying substances with "CA", "GSH", "$GSO_3H$", "LA" or "MMS", it has been discovered that these sulfur-containing compounds are widely effective in the enhancement of flavor. Their discovery thus provides the possibility for novel flavor

enhancing seasonings and foods by incorporating together "Umami" components and the sulfur-containing compounds. The present invention relates to such combinations.

GSH has been studied for its physiological activity, pharmacological efficacy etc. It has been used as e.g. a liver disease treating agent, an antipyretic etc. Various applications of GSH to foods are also known. Some of these applications are given below. (1) GSH has been added to dough products of e.g., flour etc. as the so-called amino acid type, reducing agent like cysteine etc. (See Japanese Patent Publication Nos. 19863/1974, 16418/1975, 1773/1976, 9019/1976, 33981/1976, 9893/1981, Japanese Patent Application Laid-open Nos. 11967/1972, 30855/1972, 98052/1973, 122762/1979, 23853/1981 etc.). (2) Similarly, GSH has been added to sour milk and baby foods as a storage stabilizer for vitamin C. (See Japanese Patent Publication Nos. 7143/1975 and 21606/1970). (3) GSH has been added to fish paste products such as boiled fish taste as a decomposition inhibitor for nucleic acid type taste intensifying substances. (See Japanese Patent Publication No. 8694/1968). (4) GSH has been added as an agent to relieve the yeast odor of yeast extract. (See Japanese Patent Publication No. 6232/1969). (5) GSH has been used for the purpose of preventing the discoloration of canned fruit. (See Japanese Patent Publication No. 20655/1965). (6) It has been used to intensify the flavor of foods, especially canned meat by being combined with sugar, amino acids etc. by reaction. (See Japanese Patent Publication Nos. 22194/1967, 35149/1974, 28977/1978 etc.). (7) It has been used to intensify cheese flavor. (See Japanese Patent Publication No. 25024/1978 and the like).

In these examples of applications of GSH to foods, GSH is used as a physical property modifier as in above (1). In (4), (6) and (7) etc. above, there are no comments regarding the taste intensity of GSH. Furthermore, the amounts of GSH added are only extremely small amounts. For example, only 0.01 to 0.05% GSH is added in the case of dough products, 0.001 to 0.02% in the case of baby foods. Even in the case of taste intensification in meats or cheeses (as in (6) or (7) above), a similarly extremely small amount is added. Therefore, it is clear from the above examples that there has been no finding in the prior art of GSH actually having a flavor intensifying function. Moreover, it is entirely impossible to know or predict that flavor intensifying function, if any, GSH would manifest in the presence of other taste components.

$GSO_3H$ is known as a component in enokidake. Its presence has also been confirmed in a part of other mushrooms. The significance of its presence or its role in food have not yet been described. There is no reference in the prior art concerning the taste intensity of $GSO_3H$. Further it is entirely impossible to know or predict what flavor intensifying functions, if any, $GSO_3H$ manifests in the presence of the "Umami" components.

Lentinic acid is contained in shiitake and is known as a precursor to the odor of shiitake. When shiitake tissue is damaged or dried shiitake is reconstituted with water, it undergoes various chemical and/or biochemical reactions; e.g., enzymatic action by γ-glutamyl transferase, C—S lyase etc. Resultingly lenthionine which is an odorous principle of shiitake is formed.

In none of the above-described research was there any mention suggesting the flavor intensity of lentinic acid. Further, it is entirely impossible to know or predict what flavor intensifying functions, if any, lentinic acid manifests in the presence of the "Umami" components.

MMS is also known as vitamin U. It has been intensively investigated for its pharmacological efficacy and has been used as e.g. an antiulcer agent. Various applications of MMS in foods are also known. Some of these applications are given below. (1) MMS has been used also for the purpose of intensifying and modifying the taste of food by adding it as a so-called taste presursor substance to the food and subsequently converting it into a taste substance by heating. (See Japanese Patent Application Laid-open No. 92663/1979 etc.). (2) MMS has been used for the purpose of enhancing the nutritional value of soybean paste, bean milk etc. (See Japanese Patent Publication Nos. 19827/1968 and 13979/1974). (3) It is used as an antioxidant for oils and fats. (See Japanese Patent Publication No. 1125/1975). (4) And it is used for the purpose of preventing the decomposition of vitamin $B_1$. In this use it is incorporated in compositions to which sulfurous acid has been added to serve as a deterioration inhibitor; e.g., medicines, foods etc. (See Japanese Patent Publication No. 6153/1963).

There has been no disclosure relating to the flavor intensity of MMS in any of these application. Further, it is entirely impossible to guess or predict what flavor intensifying function, if any, MMS manifests in the presence of the "Umami" components.

Cycloalliin is also known as imino acid. It is a sulfur-containing component in onion and garlic. There are only few studies of its characteristics. It is known that cycloalliin is formed by reaction of s-propenylcysteinsulfoxide which is contained in 3% by wt. as a dry matter in onion. In none of the research relating to cycloalliin, described above, are there any remarks of the flavor intensity of cycloalliin. Further, it is entirely impossible to know or predict what flavor intensifying functions, if any, cycloalliin manifests in the presence of the "Umami" components.

In accordance with the present invention, a characteristic flavor intensity enhancing effect can be obtained by using "GSH", $GSO_3H$, "CA", "LA" and/or MMS in combination with conventionally known "Umami" compounds such as MSG, IMP, GMP etc. The present invention further provides that these combinations are made in accordance with specified ratios. This invention relates to the intensification of the impression of taste (flavor enhancement) and to further impart flavor. Flavor here is the continuity, amplitude, thickness, etc. of the original taste "Umami", bitterness, sweetness, acid taste, saltiness etc. while the original taste remains unchanged.

The mixing ratio of the "Umami" component to the sulfur-containing component selected from the

group consisting of "GSH", $GSO_3H$, "CA", "LA" and MMS may be determined as follows. The amount of the sulfur-containing compound or compounds added is within the range of 0.1 to 1000% by weight based on the weight of the present "Umami" component. The "Umami" component is calculated as the weight of MSC required to manifest the same "Umami" strength. All comparisons are made to the "Umami" strength of MSG. When a nucleic acid type taste intensifying substance such as IMP, GMP etc. is used alone, the mixing ratio of sulfur-containing compound or compounds is 1:99 to 99:1. For example, in the case where the "Umami" component comprises only MSG, the sulfur-containing compound or compounds are present at a concentration of 0.001 to 10 times that of MSG. In the other case, i.e. where MSG and IMP or GMP are also present as the "Umami" components, the "Umami" strength (y value) may be determined according to the following equations:

$$\text{IMP: } y = u + 1218\,uv$$
$$\text{GMP: } y = u + 2800\,uv$$

wherein u = MSG concentration (%), and v = IMP or GMP concentration (%).

While the conversion equation to obtain each y value can vary depending on the kinds and number of the tastiness components etc., the conversion equation established by organoleptically comparison with a simple aqueous solution of MSG may be appropriately used. For instance, the y value where IMP and GMP are used in combination at a ratio of 50:50 is as follows:

$$y = u + 2010\,uv$$

wherein u = MSG concentration (%), and v = IMP/GMP mixture concentration (%).

In this invention a characteristic flavor enhancing effect can also be obtained by using the compounds of the general formulae (1) and (2) (shown below) either singly or as a mixture.

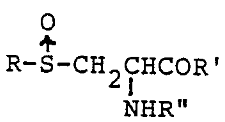

(1)

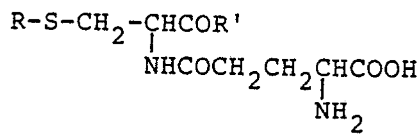

(2)

wherein R is a saturated or unsaturated aliphatic hydrocarbon group of 1 to 4 carbon atoms, or a carboxyalkyl group wherein the alkyl group is from $C_1$ to $C_6$; or, in formula (2), H when R′ is OH.

R′ is OH or a carboxymethylamino group, and

R″ is H or a γ-glutamyl group.

The compounds of general formulae (1) and (2) are used in amount falling in a specified ratio to the "Umami" components such as MSG, IMP, GMP etc. The effect in this case is to intensify the impression of the taste and further impart flavor; to further develop the continuity, amplitude, thickness etc. The flavor thus obtained is characterized by that the original taste — "Umami" bitterness, sweetness, acid taste, saltiness etc. — remains unchanged.

The mixing ratio of the "Umami" component to these compounds may be determined as follows. The amount of compound (1) or (2) or combination thereof added is 0.1 to 1000% by weight based on the weight of the also present "Umami" component. The weight of the also present "Umami" component is calculated as the weight of, e.g. MSG, required to manifest the same "Umami" strength. When a nucleic acid type taste intensifying substance such as IMP, GMP etc. are used alone, the mixing ratio of these to compounds (1) or (2) or combination thereof is in the range of 1:99 to 99:1. In other words, in the case where the "Umami" component comprises only MSG, compound (1) or (2) or combination thereof are present in an amount of 0.001 to 10 times the concentration of MSG. In the other case, i.e., where MSG and IMP or GMP are present as the "Umami" components, the "Umami" strength (y value) may be determined according to the following equations:

$$\text{IMP: } y = u + 1218\,uv$$
$$\text{GMP: } y = u + 2800\,uv$$

wherein u = MSG concentration (%), and v = IMP or GMP concentration (%).

While the conversion equation to obtain each y value can vary depending on the kinds and number of the "Umami" components etc., y values established by organoleptic comparison against a simple aqueous solution of MSG may be appropriately used. For instance, the y value where IMP and GMP are used in combination at a ratio of 50:50 is as follows:

$$y = u + 2010\,uv$$

wherein u = MSG concentration (%), and v = IMP/GMP mixture concentration (%).

The compounds of formulae (1) and (2) can also be used in combination with any of the other sulfur-containing compounds: "GSH", $GSO_3H$, "CA", "LA" and MMS.

Other features of the invention will become apparent in the course of the following descriptions of exemplary embodiments which are given for illustration of the invention and are not intended to be limiting thereof.

Experimental Example 1

(Evaluation in Simple Aqueous Solution Systems)

Using as a control a mixed aqueous solution of 0.05 g/dl of MSG and 0.05 g/dl of IMP (y value = 3.09), sample solutions were prepared by adding 0.001 to 0.5 g/dl of GSH to the mixed aqueous solution. These sample solutions were organoleptically evaluated by paired comparison tests against the control using an organoleptic panel of 20 members (N = 20). The results are given in Table 1.

Table 1

N = 20

| | Formulation | | | Taste Intensifying Effect | |
|---|---|---|---|---|---|
| | MSG g/dl | IMP g/dl | GSH g/dl | Strength of "Umami" | Strength of Flavor Enhancement |
| Control | 0.05 | 0.05 | -- | ± | ± |
| Sample A | " | " | 0.001 | ± | ± |
| B | " | " | 0.01 | ± | ++ |
| C | " | " | 0.05 | ± | +++ |
| D | " | " | 0.1 | + | ++++ |
| E | " | " | 0.3 | ± | ++++++ |
| F | " | " | 0.5 | ± | ++++++ |

The following notation is used throughout the examples: (+) = enhancement of property being investigated, (++) = pronounced enhancement, etc., (±) = no noticeable enhancement, (−) = mitigation of property being investigated).

As shown in Table 1, with less than 0.1% of GSH added, based on the y value (MSG calculated amount), the strength of flavor is comparable to that of the control. But by the addition of 0.1% or more of GSH, the flavor alone is remarkably increased without changing the strength of "Umami" and other basic tastes. If the absolute concentration of GSH exceeds 1.0%, specific thickness in taste is manifested and the total taste balance is lost. Therefore, the amount of GSH added should suitably be in the range of 0.1 to 1000% by weight, preferably 0.1 to 50% by weight, based on the weight of the also present tastiness component. Where the amount of tastiness component used is calculated as the weight of MSG having the same "Umami" strength. (See equations above). Further, GSH manifests the most preferred effect in the presence of an appropriate amount of the above "Umami" component, that is, when the above y value is 0.1 to 30 as the concentration at the time of eating.

On the other hand, in the case where the nucleic acid type taste intensifying substance such as IMP, GMP etc. is used alone, if GSH is added at a ratio of less than 1/99 to the nucleic acid type taste intensifying substance, the flavor enhancing effect is not adequate. Further when GSH is present in an amount of 250%/wt. or more based on the amount of nucleic acid type taste intensifying substance, GSH manifests the most preferred effect. Whereas if GSH exceeds a ratio of 99/1, a specific thickness in taste is brought about and the total taste balance is lost.

Experimental Example 2

(Evaluation in Beef Extract Systems)

According to the analytical values of beef extract, the effect of the addition of GSH to a formulation of major components was evaluated by paired comparison test against a control. The results are given in Table 3, from which it has been confirmed that in the synthetic beef extract as well, GSH imparts a higher natural taste by manifesting a strong flavor enhancement.

Table 2

Formulation of Major Components of Beef Extract

| | Formulation |
|---|---|
| MSG | 3 % |
| IMP | 3 |
| NaCl | 11 |
| $K_2HPO_4$ | 10 |
| $KH_2PO_4$ | 25 |
| Sodium lactate | 20 |
| Histidine hydrochloride | 20 |
| Alanine | 4 |
| Lysine hydrochloride | 4 |
| | 100 |

Table 3

| | Major Components g/dl | GSH g/dl | Strength of Flavor Enhancement |
|---|---|---|---|
| Control | 2 | 0 | ± |
| Sample A | " | 0.01 | ++ |
| B | " | 0.1 | ++++ |
| C | " | 0.2 | +++ |

GSH in this invention may be obtained by any production process, such as an extraction process, a synthesis process etc. Further, it is also possible to replace the whole or part of the required GSH by a substance containing GSH.

Experimental Example 3
(Evaluation in Shrimp Extract Systems)

According to the analytical values of the extract components of shrimp which is a natural delicious food, the major components were formulated and organoleptically evaluated similarly as in Experiment Example 2. These tests confirm, as shown in Table 5, that GSH imparted a higher natural taste by manifesting a strong flavor enhancement as it did in beef extract tests.

Table 4

(Formulation of Major Components)

| | |
|---|---|
| MSG | 3.9 % |
| IMP | 3.9 |
| NaCl | 12.6 |
| $K_2HPO_4$ | 13.0 |
| $KH_2PO_4$ | 5.3 |
| Sodium lactate | 15.3 |
| Alanine | 15.4 |
| Glycine | 15.3 |
| Arginine | 15.3 |
| | 100.0 |

Table 5

| | Major Component (g/dl) | GSH (g/dl) | Strength of Flavor Enhancement | Strength of Natural Feel |
|---|---|---|---|---|
| Control | 1.3 | 0 | ± | ± |
| Sample A | " | 0.006 | ++ | ++++ |
| B | " | 0.06 | ++++ | ++++ |
| C | " | 0.12 | +++++ | +++ |

Experimental Example 4

(Evaluation in Simple Aqueous Solution Systems)

A mixed aqueous solution of 0.05 g/dl of MSG and 0.05 g/dl of IMP (y value = 3.09) was used as a control. Sample solutions were prepared by adding 0.002 to 1.0 g/dl of $GSO_3H$ to the mixed aqueous solution, and these were organoleptically evaluated by paired comparison test against the control using an organoleptic panel of 20 members (N = 20). The results are given in Table 6.

Table 6

N = 20

| | Formulation | | | Taste Intensifying Effect | |
|---|---|---|---|---|---|
| | MSG g/dl | IMP g/dl | $GSO_3H$ g/dl | Strength of "Umami" | Strength of Flavor Enhancement |
| Control | 0.05 | 0.05 | -- | ± | ± |
| Sample A | " | " | 0.002 | ± | ± |
| B | " | " | 0.02 | ± | + |
| C | " | " | 0.05 | ± | + |
| D | " | " | 0.1 | ± | ++ |
| E | " | " | 0.15 | ± | +++ |
| F | " | " | 0.5 | ± | +++ |
| F' | " | " | 1.0 | ± | +++ |
| G | -- | 0.1 | 0.1 | - | ++ |

As shown in Table 6, with less than 0.1% of $GSO_3H$ added, based on the y value (MSG calculated amount), the strength of flavor enhancement is comparable to that of the control. By the addition of 0.1% or more, the flavor enhancement alone is remarkably increased without changing the strength of "Umami" component. If the absolute concentration of $GSO_3H$ exceeds 1.0%, specific thickness in taste is manifested and the total taste balance is lost. Therefore, the amount of $GSO_3H$ added should suitably be in the range of 0.1 to 1000% by weight, preferably 0.1 to 50% by weight, based on the weight of co-present "Umami" component. The amount of "Umami" component used is calculated as the weight of MSG having the same "Umami" strength. (See equations). Further, $GSO_3H$ manifests the most preferred effect in the presence of an appropriate amount of the above "Umami" component, that is, when the above y value is 0.1 to 30 as the concentration at the time of eating.

On the other hand, if the nucleic acid type taste intensifying substance is used alone and $GSO_3H$ is added at a ratio of less than 1/99 relative to the nucleic acid type taste intensifying substance, the flavor enhancing effect is not adequate. Whereas if this ratio exceeds 99/1, a specific thickness in taste is brought about and the total taste balance is lost.

Experimental Example 5
(Evaluation in Simple Aqueous Solution Systems)

A mixed aqueous solution of 0.05 g/dl of MSG and 0.05 g/dl of IMP (y value = 3.09) was used as a control. Sample solutions were prepared by adding 0.002 to 1.0 g/dl of lentinic acid or des-glutamyl lentinic acid (LA) to the mixed aqueous solution. These sample solutions were organoleptically evaluated by paired comparison against the control using an organoleptic panel of 20 members (N = 20). The results are given in Table 7.

Table 7

| | Formulation | | | Taste Intenstifying Effect | |
|---|---|---|---|---|---|
| | MSG g/dl | IMP g/dl | "LA" g/dl | Strength of "Umami" | Strength of Flavor Enhancement |
| Control | 0.05 | 0.05 | -- | ± | ± |
| Sample A | " | " | 0.002 | ± | ± |
| B | " | " | 0.02 | ± | + |
| C | " | " | 0.05 | ± | + |
| D | " | " | 0.1 | ± | ++ |
| E | " | " | 0.5 | ± | +++ |
| F | " | " | 1.0 | ± | +++ |
| G | -- | 0.1 | 0.1 | - | ++ |

As shown in Table 7, with amounts of added lentinic acid or des-glutamyl lentinic acid less than 0.1% based on the y value (MSG calculated amount), the strength of flavor enhancement is comparable to that of the control. But by the addition of 0.1% or more of lentinic acid or des-glutamyl lentinic acid, the flavor enhancement alone is remarkably increased without changing the strength of "Umami". If the absolute concentration of lentinic acid or des-glutamyl lentinic acid exceeds 1.0%, specific thickness in taste is manifested and the total taste balance is lost. Therefore, the amount of "LA" added should suitably be in the range of 0.1 to 1000% by weight, preferably 0.1 to 50% by weight, based on the weight of co-present tastiness component calculated as the weight of MSG having the same "Umami" strength. Further, "LA" manifests the most preferred effect in the presence of an appropriate amount of the above "Umami" component. That is, when the above y value is 0.1 to 30 as the concentration at the time of eating.

On the other hand, in the case where a nucleic acid type taste intensifying substance such as IMP, GMP etc. is used alone, if "LA" is added at a ratio of less than 1/99 to the nucleic acid type taste intensifying substance, the flavor enhancing effect is not adequate. Whereas if this ratio exceeds 99/1, a specific thickness in taste is brought about and the total taste balance is lost.

Experimental Example 6
(Evaluation in Simple Aqueous Solution Systems)

A mixed aqueous solution of 0.05 g/dl of MSG and 0.05 g/dl of IMP (y value = 3.09) was used as a control. Sample solutions were prepared (1) by adding 0.001 to 1.0 g/dl of MMS to the mixed aqueous solution, and (2) by mixing aqueous solutions of 0.1 g/dl of IMP and 0.1 g/dl of MMS. These sample solutions were organoleptically evaluated by paired comparison test against the control using an organoleptic panel of 20 members (N = 20). The results are given in Table 8.

Table 8

N = 20

| | Formulation | | | Taste Intenstifying Effect | |
|---|---|---|---|---|---|
| | MSG g/dl | IMP g/dl | MMS g/dl | Strength of "Umami" | Strength of Flavor Enhancement |
| Control | 0.05 | 0.05 | -- | ± | ± |
| Sample A | " | " | 0.002 | ± | ± |
| B | " | " | 0.01 | ± | + |
| C | " | " | 0.05 | ± | ++ |
| D | " | " | 0.1 | ± | ++++ |
| E | " | " | 0.5 | ± | +++++ |
| F | " | " | 1.0 | ± | ++++ |
| H | – | 0.1 | 0.1 | - | ++++ |

As shown in Table 8, when the amount of added MMS is less than 0.1% based on the y value (MSG calculated amount), the strength of flavor enhancement and the characteristic sweetness are comparable to that of the control. But by the addition of 0.1% or more, the flavor enhancement and the characteristic sweetness are remarkably increased without changing the strength of "Umami" and the characteristic sweetness. If the concentration of MMS exceeds 1.0%, a characteristic aroma or specific thickness in taste is manifested and the total taste balance is lost. Therefore, the amount of MMS added should suitably be in the range of 0.1 to 1000% by weight, preferably 0.1 to 50% by weight, based on the weight of also present "Umami" component. The amount of "Umami" component used is calculated as the weight of MSG having the same "Umami" strength. (See equations). Further, MMS manifests the most preferred effect in the presence of an appropriate amount of the above "Umami" component. That is, when the above y value is 0.1 to 30 as the concentration at the time of eating.

On the other hand, when a nucleic acid type taste intensifying substance such as IMP, GMP etc. is used alone, if MMS is added at a ratio of less than 1/99 to the nucleic acid type taste intensifying substance, the flavor enhancement as well as the characteristic sweetness enhancing effect is not adequate. Whereas if the ratio exceeds 99/1, a characteristic sweetness or specific thickness in taste is brought about and the total taste balance is lost.

Experimental Example 7
(Evaluation in Onion Extract Systems)

According to the analytical values of the onion extract, the effect of the addition of MMS to the formulation of major components was evaluated by a paired comparison test against a control case. The results are given in Table 10, from which it has been found that MMS imparts clear vegetable characteristic sweetness and strong flavor enhancement and gives a natural feel.

Table 9
(Formulation of Major Components in Onion Extract)

| | Formulation (%) |
|---|---|
| Glucose | 25 |
| Sucrose | 15 |
| Maltose | 25 |
| Amino Acids * | 10 |
| Na Citrate | 15 |
| Na Malate | 10 |
| | 100 |

* Amino acids: a mixture of MSG, arginine, lysine, isoleucine, leucine, aspartic acid, glycine, phenylalanine and proline.

Table 10

| | Major Component | MMS | Characteristic Sweetness | Flavor Enhancement | Natural Feel |
|---|---|---|---|---|---|
| Control | 2 g/dl | -- | ± | ± | - |
| Sample A | " | 0.01 g/dl | + | ++ | ± |
| Sample B | " | 0.1 | ++ | +++ | + |
| Sample C | " | 0.2 | ++ | ++++ | ++ |

(ca. 0.04 g/dl as an MSG concentration)

Experimental Example 8

(Evaluation in Simple Aqueous Solution Systems)

A mixed aqueous solution of 0.05 g/dl of MSG and 0.05 g/dl of IMP (y value = 3.09) was used as a control. Sample solutions were prepared by (1) adding 0.002 to 1.0 g/dl of cycloallin to the mixed aqueous solution and (2) by adding 0.1 g/dl of cycloallin to an aqueous solution of 0.1 g/dl of IMP. These sample solutions were organoleptically evaluated by paired comparison tests against the control using an organoleptic panel of 20 members (N = 20). The results are given in Table 11.

Table 11

N = 20

| | Formulation | | | Taste Intenstifying Effect | |
|---|---|---|---|---|---|
| | MSG g/dl | IMP g/dl | Cyclo-Alliin g/dl | Strength of "Umami" | Strength of Flavor Enhancement |
| Control | 0.05 | 0.05 | -- | ± | ± |
| Sample A | " | " | 0.002 | ± | ± |
| B | " | " | 0.02 | ± | + |
| C | " | " | 0.05 | ± | + |
| D | " | " | 0.1 | ± | ++ |
| E | " | " | 0.5 | ± | +++ |
| F | " | " | 1.0 | ± | +++ |
| G | -- | 0.1 | 0.1 | ± | + |

As shown in Table 11, when the amount of added cycloallin is less than 0.1% based on the y value (MSG calculated amount), the strength of flavor enhancement is comparable to that of the control. But by the addition of 0.1% or more, the flavor enhancement alone is remarkably increased without changing the strength of "Umami". If the absolute concentration of cycloallin exceeds 2.0%, specific thickness in taste is manifested and the total taste balance is lost. Therefore, the amount of allin added should suitably be in the range of 0.1 to 1000% by weight, preferably 0.1 to 50% by weight, based on the weight of co-present "Umami" component calculated as the weight of MSG having the same "Umami" strength. Further, cycloallin manifests the most preferred effect in the presence of an appropriate amount of the above "Umami" component. That is, when the above y value is 0.1 to 30 as the concentration at the time of eating.

On the other hand, when a nucleic acid type taste intensifying substance is used alone, if cycloallin is added at a ratio of less than 1/99 to the nucleic acid type taste intensifying substance, the flavor enhancing effect is not adequate. Whereas if the ratio exceeds 99/1, specific thickness in taste is brought about and the total taste balance is lost.

GSH or $GSO_3H$ in this invention may be that produced by any process, e.g., a fermentation process, an enzymatic process, a chemical synthetic process or mixture thereof, etc. Further, it is also possible to replace the whole or part of the amount of the required GSH by a substance containing GSH at a relatively high concentration such as yeast extract, garlic extract, beef extract, chicken extract etc. The same may be

done with $GSO_3H$ where a substance containing $GSO_3H$ at a relatively high concentration, such as enokidake extract, is used.

Lentinic acid in this invention may be obtained from shiitake as is well known in the art, e.g. by extraction with alcohol, extraction with hot water, etc. Further, it is also possible to replace the whole or part of lentinic acid by an intermediate obtained by such extraction.

Cycloallin in this invention may be obtained from onion or garlic as is well known in the art, e.g. by extraction with alcohol, extraction with hot water, etc. Further, it is also possible to replace the whole or part of cycloallin by an intermediate, end product, or a chemical or enzymatic-reaction product of the extract containing the precursor.

Similarly, as regards the glutamic acid, nucleic acid type taste intensifying substances and other "Umami" components, the whole or part of said "Umami" components may be replaced by such "Umami" components as contained in foods and seasonings per se to which the sulfur-containing compound or compounds are to be added.

The "Umami" components used in combination with the sulfur-containing compounds in this invention include, in addition to MSG, IMP and GMP, any component having a "Umami" imparting effect. For example, potassium glutamate, calcium glutamate, potassium 5'-inosinate, calcium 5'-inosinate, potassium 5'-guanylate, calcium 5'-guanylate etc. and any food or seasoning which contains at least one tastiness component as one of its constituents. For example, HAP, HVP, yeast extract, meat extract, fish extract, vegetable extract etc. may be used.

The flavor enhancement seasonings of this invention may be prepared by any process. For example, the seasonings may be prepared by merely dry blending MSG, IMP, GMP etc. with these compounds by pelletizing them together with an appropriate excipients, etc. Similarly, with regards to the production of food having enhanced flavor in accordance with this invention, the actual manner for the production is not limited as long as the "Umami" compounds and the sulfur-containing compound or compounds are co-present in the final product at the above-described mixing ratio.

In addition, it is needless to say that the use in combination of various seasonings, for example, salty taste agents such as table salt, potassium chloride etc., sweetening agents such as sugar etc., acid taste agents such as organic acids etc., flavors, spices, physical property modifiers etc. is possible unless it departs from the object of this invention.

The seasoning or food of this invention manifests a strong tastiness enhancement as is the case when seasoned with e.g. MSG, IMP, GMP etc. Such known seasonings give, individually, a strong single, 'simple' taste. Seasonings embodying the invention permit the enhancement of only the flavor without changing the "Umami" strength and the original taste such as saltiness, sweetness and the like. The seasoning or food of the present invention are characterized by the impartation of a complex natural taste. Therefore the seasonings of the present invention provide a novel flavor enhancement seasoning having a high natural taste in the compound seasoning field.

This invention is more particularly described by the following examples.

## Example 1

Formulation of Flavor Enhancement Seasoning A

| | |
|---|---|
| MSG | 80 parts by weight |
| GSH | 20 " |

Formulation of Flavor Enhancement Seasoning B

| | |
|---|---|
| MSG | 75 parts by weight |
| IMP | 5 " |
| GSH | 20 " |

Formulation of Flavor Enhancement Seasoning C

| | |
|---|---|
| MSG | 50 parts by weight |
| GMP | 10 " |
| GSH | 40 " |

Formulation of Flavor Enhancement Seasoning D

| | | |
|---|---|---|
| MSG | 80 | parts by weight |
| IMP | 3 | " |
| GMP | 3 | " |
| GSH | 14 | " |

Formulation of Flavor Enhancement Seasoning $D_1$

| | | |
|---|---|---|
| IMP | 30 | parts by weight |
| GMP | 30 | " |
| GSH | 40 | " |

Flavor Enhancement Seasonings A to $D_1$ were prepared by mixing the respective compounds according to the above formulations. Using as each control a product to which GSH had not been added, aqueous solutions of 0.4 g/dl of the respective samples were prepared, and organoleptically evaluated by a paired comparison test using a 20 member panel of judges. The results are given in Table 12.

Table 12

N = 20

| | A | B | C | D | $D_1$ |
|---|---|---|---|---|---|
| Strength of "Umami" | + | ++ | ++++ | +++ | ± |
| Strength of Flavor Enhancement | +++ | +++++ | ++++++ | ++++++ | +++++ |

Example 2

Table 13

Formulations of Flavor Enhancement Seasonings E - H

(parts by weight)

| | E | F | G | H |
|---|---|---|---|---|
| HVP | 60 | 60 | 60 | 60 |
| MSG | 26 | 26 | 26 | 26 |
| IMP | 1 | 1 | 1 | 1 |
| GMP | 1 | 1 | 1 | 1 |
| 2Na Succinate | 2 | 2 | 2 | 2 |
| NaCl | 10 | 10 | 10 | 10 |
| GSH | 1.7 | 8.3 | 16.7 | 33.3 |

Flavor enhancement Seasonings E to H were prepared by mixing the respective components according to the above formulations. Using as each control a product to which GSH had not been added, organoleptic evaluation was conducted by a paired comparison test similarly as in Example 1. The results are given in Table 14.

Table 14

N = 10

| | Control | E | F | G | H |
|---|---|---|---|---|---|
| Concentration (Simple Soln) (g/dl) | 0.6 | 0.61 | 0.65 | 0.7 | 0.8 |
| Strength of "Umami" | ± | ± | ± | ± | ± |
| Strength of Flavor Enhancement | ± | ++ | +++ | +++++ | +++++ |

Example 3

Formulation of Flavor Enhancement Seasoning I

| | | |
|---|---|---|
| MSG | 1.5 | parts by weight |
| Potassium L-glutamate | 1.5 | " |
| NaCl | 8 | " |
| KCl | 3 | " |
| $K_2HPO_4$ | 10 | " |
| $KH_2PO_4$ | 25 | " |
| Sodium lactate | 20 | " |
| L-Histidine hydrochloride | 20 | " |
| DL-Alanine | 4 | " |
| L-Lysine hydrochloride | 4 | " |
| GSH | 5 | " |

Flavor Enhancement Seasoning I was prepared by mixing the respective components according to the above formulation. A sample was then prepared by adding the seasoning I to beef consomme soup prepared in a conventional manner at a concentration of 1 g/dl. Using as a control beef consomme soup to which GSH had not been added, the beef consomme soup was organoleptically evaluated by a paired comparison test using a 20 member panel of judges. The results given in Table 15, show that the product of this invention enhanced the flavor such as thickness, amplitude, continuity etc. of the beef consomme soup. The beef consomme soup containing seasoning I was significantly more flavored as compared with the control.

Table 15

N = 20

| | Control | Present Invention |
|---|---|---|
| Strength of Odor & Flavor | 9 | 11 |
| Strength of "Umami" | 6 | 14** |
| Strength of Flavor Enhancement | 2 | 18*** |
| Total Preference | 2 | 18*** |

*** Significantly different at a risk factor of 0.1%

** Significantly different at a risk factor of 1%

Table 16

Formulations of Flavor Enhancement Seasonings J - M (parts by weight)

| | J | K | Control 1 | L | M | Control 2 |
|---|---|---|---|---|---|---|
| Yeast Extract | 100 | 100 | 100 | 100 | 100 | 100 |
| MSG | - | - | - | 1.5 | 1.5 | 1.5 |
| IMP | - | - | - | 1.5 | 1.5 | 1.5 |
| GSH | 1 | 20 | - | 1 | 20 | - |

Flavor Enhancement Seasonings J to M were prepared according to the formulations of Table 16. They were then organoleptically evaluated using 0.1% aqueous solutions of the respective samples by a paired comparison test method. The results are given in Table 17.

Table 17

N = 10

| | Paired Comparison against Control 1 | | Paired Comparison against Control 2 | |
|---|---|---|---|---|
| | J | K | L | M |
| Strength of Flavor Enhancement | + | ++++ | ++++ | +++++ |

As shown in Table 17, it has been confirmed that in yeast extract, GSH had an especially strong effect to impart flavor enhancement in the presence of appropriate amounts of MSG and IMP.

Example 5

30 Parts by weight of Flavor Enhancement Seasonings F and H and the control of Example 2 were added respectively to a seasoning liquor (pH 4.2, 1 g/dl) comprising 0.5 part by weight of citric acid, 0.6 part by weight of malic acid, 0.6 part by weight of fumaric acid, 0.15 part by weight of succinic acid, 0.5 part by weight sodium polyphosphate, 2.0 parts by weight of sorbitol and 0.4 part by weight of potassium sorbate.

500 g portions of preliminary pickled radish were pickled in 300 ml portions of the respective seasoning liquors obtained above to prepare 3 kinds of radishes pickled in a jar. These were then organoleptically evaluated by a paired comparison test. The results are shown in Table 18. The radishes to which Flavor Enhancement Seasonings F and H had been added were superior to the control radishes in both flavor and preference.

Table 18

N = 20

| | Control Section | F Added Section | H Added Section |
|---|---|---|---|
| Strength of Odor & Flavor | ± | ± | ± |
| Strength of "Umami" | ± | ± | ± |
| Strength of Flavor Enhancement | ± | +++ | ++++ |
| Preference | ± | ++++ | ++++ |

Example 6

Curry was prepared in a conventional manner using the recipe shown below and organoleptically evaluated for strength of flavor enhancement and total preference. The results shown in Table 19 demonstrate that the curry to which flavor enhancing Seasoning M had been added had stronger flavor and was significantly favored as compared with the control.

Recipe for Curry

| | | |
|---|---|---|
| Lard | 8 | Parts by weight |
| Low gluten flour | 6 | " |
| Curry powder | 1.5 | " |
| Table salt | 1.7 | " |
| Lecithin | 0.04 | " |
| Onion powder | 0.3 | " |
| Sugar | 1.5 | " |
| Flavor Enhancing Seasoning in Example 4 | 0.5 | " |
| (or Control 2 in Example 4) | (0.5 | " ) |

Table 19

N = 20

| | Control 2 Added Section | M Added Section |
|---|---|---|
| Strength of Flavor Enhancement | 4 | 16** |
| Total Preference | 5 | 15* |

** Significantly different at a risk factor of 1%
* Significantly different at a risk factor of 5%

Example 7

Pork sausages were prepared by using 650 parts by weight of pork, 50 parts by weight of lard, 50 parts by weight of corn starch, 5 parts by weight of spices, 25 parts by weight of a salting agent, 220 parts by weight of cold water and 5 parts of each of flavor enhancement Seasonings N, P, O. Pork sausages without seasoning were used as controls. The seasoning containing pork sausages and the control pork sausages were prepared by emulsification according to the formulation shown in Table 20. The pork sausages were prepared in a conventional manner, and organoleptically tested to find as shown in Table 21 that the pork sausages to which flavor enhancement Seasonings N, P and O had been added were significantly flavored as compared with that to which the control had been added.

Table 20

Formulations of Mouthfulness Seasonings N, P & O

| | Parts By Weight | | | |
|---|---|---|---|---|
| | Control | N | P | O |
| Pork extract | 20 | 20 | 20 | 20 |
| Pork fat | 20 | 20 | 20 | 20 |
| MSG | 10 | 10 | 10 | 10 |
| IMP | 3 | 3 | 3 | 3 |
| "Ajieki" (produced by Ajinomoto Co.) | 30 | 30 | 30 | 30 |
| Sugar ester | 2 | 2 | 2 | 2 |
| Reducing dextrin | 15 | 15 | 15 | 15 |
| GSH | - | 2 | 10 | 20 |

Table 21

N = 10

| | Control Added Section | N Added Section | O Added Section | P Added Section |
|---|---|---|---|---|
| Meaty taste | + | + | ++ | +++ |
| Strength of Flavor Enhancement | ± | + | +++ | ++++ |
| Preference | + | ++ | ++++ | +++ |

Example 8

Tests confirmed that tomato juice, Japanese sake, commercial consomme soup, soy sauce, soybean taste soup, Worcester sauce and seaweed boiled down in soy sauce, either in which natural MSG and/or nucleic acid type taste intensifying substances had been already present or to which they were added at the time of production can be enhanced through imparting flavor enhancement by adding varied amounts of GSH to each. It was found that flavor enhancement was manifested in a variety of foods by adding an amount of GSH falling within the ranges shown in Table 22, to each.

Table 22

| | Effective GSH Addition Range |
|---|---|
| Tomato juice | 0.02 - 0.4 % |
| Japanese sake | 0.001 - 0.1 |
| Consomme soup | 0.05 - 0.4 |
| Soy sauce | 0.05 - 0.4 |
| Soybean paste soup | 0.02 - 0.2 |
| Worcester sauce | 0.05 - 0.4 |
| Seaweed boiled down in soy sauce | 0.1 - 0.6 |

Example 9

Table 23

| | Flavor Enhancement Seasoning | | | | |
|---|---|---|---|---|---|
| | A' | B' | C' | D' | E' |
| MSG | 80 | 75 | 50 | 80 | - |
| IMP | - | 5 | - | 3 | 30 |
| GMP | - | - | 10 | 3 | 30 |
| $GSO_3H$ | 20 | 20 | 40 | 14 | 40 |

Flavor Enhancement Seasonings A′ to E′ were prepared by mixing the respective components according to the formulations outlined in Table 23. Using as a control in each instance a composition to which $GSO_3H$ had not been added, aqueous solutions of 0.4 g/dl of the respective samples were prepared, and organoleptically evaluated by a paired comparison test. The results are given in Table 24.

Table 24

| | A' | B' | C' | D' | E' |
|---|---|---|---|---|---|
| Strength of "Umami" | + | ++ | +++ | +++ | ± |
| Strength of Flavor Enhancement | ++ | +++ | ++++ | +++ | +++ |

Table 25

Formulations of Flavor Enhancement Seasonings F'- K'

(parts by weight)

| | F' | G' | H' | I' | J' | K' |
|---|---|---|---|---|---|---|
| HVP | 60 | 60 | 60 | 60 | - | - |
| HAP | - | - | - | - | 60 | 60 |
| MSG | 26 | 26 | 26 | 26 | 26 | 26 |
| IMP | 1 | 1 | 1 | 1 | 1 | 1 |
| GMP | 1 | 1 | 1 | 1 | 1 | 1 |
| 2Na Succinate | 2 | 2 | 2 | 2 | 2 | 2 |
| NaCl | 10 | 10 | 10 | 10 | 10 | 10 |
| $GSO_3H$ | 1.7 | 8.3 | 16.7 | 33.3 | 1.7 | 33.3 |

Flavor Enhancement Seasonings F′ to K′ were prepared by the mixing respective components according to the above formulations. Using as each control a composition to which $GSO_3H$ had not been added, organoleptic evaluation was conducted by a paired comparison test. The results are given in Table 26.

Table 26

| | Control | F' | G' | H' | I' | J' | K' |
|---|---|---|---|---|---|---|---|
| Concentration (g/dl) | 0.6 | 0.61 | 0.65 | 0.7 | 0.8 | 0.61 | 0.8 |
| Strength of "Umami" | ± | ± | ± | ± | ± | ± | ± |
| Strength of Flavor Ehancement | ± | + | ++ | +++ | +++ | + | +++ |

Example 11

Consomme soups were prepared according to the following formulations and organoleptically evaluated for the strength of flavor enhancement and total preference. The evaluation shows that the consomme soup to which Flavor Enhancement Seasoning H' had been added had a stronger flavor and was significantly favored as compared with the control.

Recipe for Consomme Soup

| | |
|---|---|
| Consomme soup stock (10 g of shavings of dried bonito) | 1000 ml |
| Soy Sauce | 3 ml |
| Table salt | 6.5 g |
| Flavor Enhancement Seasoning of Example 10 (or Control Section in Example 10) | 0.6 g |

Table 27

| | Control Added Section | Flavor Enhancement Seasoning H' Added Section |
|---|---|---|
| Strength of Flavor Enhancement | 4 | 16 ** |
| Preference of Flavor Enhancement | 5 | 5 * |

** Significantly different at a risk factor of 1%
* Significantly different at a risk factor of 5%

Example 12

Noodle soup was prepared using soy sauce, sweet sake, sugar, MSG, nucleic acid type seasoning, hydrolyzed vegetable protein and dried bonito extract according to the flavor recipe shown below. Organoleptic evaluations of the strength of the flavor and the taste of the noodle soup were conducted using a portions of the soup to which $GSO_3H$ had not been added as a control. The evaluation was done by a paired comparison test, to find as shown in Table 28 that the portion of soup to which $GSO_3H$ had been added had a strong flavor and also was significantly favored for total taste.

Recipe for Noodle Soup
(for use when eating)

| | |
|---|---|
| Soy sauce | 250 g |
| "Sake" (Japanese rice wine) | 50 |
| Sugar | 50 |
| "Ajinomoto" | 5 |
| IN | 0.2 |
| Hydrolyzed vegetable protein | 5 |
| Dried bonito extract (40 g of flake of dried bonito was extracted with 700 g of hot water) | 700 |
| $GSO_3H$ | 2 |

Table 28

| | Control Added Section | $GSO_3H$ Added Section |
|---|---|---|
| Strength of Flavor Enhancement | 4 | 16** |
| Preference | 4 | 16** |

Example 13

Table 29

| | Flavor Enhancing Seasoning | | | | |
|---|---|---|---|---|---|
| | A" | B" | C" | D" | E" |
| MSG | 80 | 75 | 50 | 80 | - |
| IMP | - | 5 | - | 3 | 30 |
| GMP | - | - | 10 | 3 | 30 |
| Lentinic acid | 20 | 20 | 40 | 14 | 40 |

Flavor Enhancing Seasonings A'' to E'' were prepared by mixing the respective components according to the above formulations. Using as a control in each instance a portion to which lentinic acid had not been added, aqueous solutions of 0.4 g/dl of the respective samples were prepared and organoleptically evaluated by a paired comparison test. The results are given in Table 30.

Table 30

| | A" | B" | C" | D" | E" |
|---|---|---|---|---|---|
| Strength of "Umami" | + | ++ | ++++ | +++ | ± |
| Strength of Flavor Enhancement | ++ | +++ | ++++ | +++ | +++ |

Example 14

Table 31

Formulations of Flavor Enhancing Seasonings F"-K"

(parts by weight)

| | F" | G" | H" | I" | J" | K" |
|---|---|---|---|---|---|---|
| HVP | 60 | 60 | 60 | 60 | - | - |
| HAP | - | - | - | - | 60 | 60 |
| MSG | 26 | 26 | 26 | 26 | 26 | 26 |
| IMP | 1 | 1 | 1 | 1 | 1 | 1 |
| GMP | 1 | 1 | 1 | 1 | 1 | 1 |
| 2Na Succinate | 2 | 2 | 2 | 2 | 2 | 2 |
| NaCl | 10 | 10 | 10 | 10 | 10 | 10 |
| Lentinic Acid | 1.7 | 8.3 | 16.7 | 33.3 | 1.7 | 33.3 |

Flavor Enhancing Seasonings F'' to K'' were prepared by mixing the respective components according to the above formulations. Using as a control in each case a formulation to which lentinic acid had not been added organoleptic evaluation was conducted by a paired comparison test similarly as in Example 13. The results are given in Table 32.

Table 32

| | Control | F" | G" | H" | I" | J" | K" |
|---|---|---|---|---|---|---|---|
| Concentration (g/dl) | 0.6 | 0.61 | 0.65 | 0.7 | 0.8 | 0.61 | 0.8 |
| Strength of "Umami" | ± | ± | ± | ± | ± | ± | ± |
| Strength of Flavor Enhancement | + | + | ++ | +++ | +++ | + | +++ |

Example 15

Consomme soups were prepared according to the formulations given in Table 33 and organoleptically evaluated for strength of flavor and total preference. The evaluations given in Table 34 show that the consomme soup to which Flavor Enhancing Seasoning H'' had been added had stronger flavor and was significantly favored as compared with the control.

Table 33

Recipe for Consomme Soup

| | |
|---|---|
| Consomme soup stock (10 g of flake of dried bonito) | 1000 ml |
| Soy Sauce | 3 ml |
| Table salt | 6.5 g |
| Flavor Enhancing Seasoning of Example 14 (or Control Section in Example 14 | 0.6 g |

Table 34

N = 20

| | Control Added Section | Flavor Enhancing Seasoning H" Added Section |
|---|---|---|
| Strength of Flavor Enhancement | 4 | 16 ** |
| Preference | 5 | 15 * |

** Significantly different at a risk factor of 1%.

* Significantly different at a risk factor of 5%.

Example 16

*Kombu Tsukudani* (tangle boiled down in soy sauce) was prepared using tangle, soy sauce, sugar, MSG, nucleic acid type seasoning, HVP and starch syrup according to the following recipe given in Table 35. Organoleptic evaluations on the strength of flavor enhancement and the preference were conducted using a *Kombu Tsukudani* to which lentinic acid had not been added as a control. The evaluations were done by a paired comparison test, to find as shown in Table 35, that the lentinic acid added section had strong flavor enhancement and also was significantly favored for the preference.

Table 35

Recipe for Kombu Tsukudani

| | |
|---|---|
| Tangle (after reconstitution in water) | 1500 g |
| Soy sauce | 1100 ml |
| Sugar | 450 g |
| "Ajinomoto" | 60 g |
| "WP" | 2 g |
| "Ajimate" | 30 g |
| Starch syrup | 400 g |
| Lentinic acid | 6 g |

Table 36

| | Control Section | Lentinic Acid Added Section |
|---|---|---|
| Strength of Flavor Enhancement | 4 | 16 ** |
| Preference | 4 | 16 ** |

Example 17

| | Flavor Enhancing Seasoning A''' (pts. by wt) | Flavor Enhancing Seasoning B''' (pts. by wt) | Flavor Enhancing Seasoning C''' (pts. by wt) | Flavor Enhancing Seasoning D''' (pts. by wt) | Flavor Enhancing Seasoning $D_I$''' (pts. by wt) |
|---|---|---|---|---|---|
| MSG | 80 | 75 | 50 | 80 | — |
| IMP | — | 5 | — | 3 | 30 |
| GMP | — | — | 10 | 2 | 30 |
| MMS | 20 | 20 | 40 | 14 | 40 |
| Total | 100 | 100 | 100 | 100 | 100 |

Flavor Enhancing Seasonings A''' to $D_I$''' were prepared by mixing the respective components outlined in the above formulations. Using as a control a product to which MMS had not been added, aqueous solutions of 0.4 g/dl of the respective samples and solutions incorporating 0.1% by weight of the same respective samples in commercial tomato juice were prepared. Their organoleptic evaluation was conducted using a paired comparison test.

The results are given in Table 37 and Table 38.

Table 37

Evaluation of Simple Aqueous Solutions

N = 20

| | A''' | B''' | C''' | D''' | $D_I$''' |
|---|---|---|---|---|---|
| Strength of "Umami" | + | ++ | ++++ | +++ | ± |
| Strength of Characteristic Sweetness | + | + | +++ | ++ | ++ |
| Strength of Flavor Enhancement | +++ | ++++++ | +++++++ | ++++++ | +++++ |

Table 38

Evaluation of Addition to Commercial Tomato Juice

(each numeral indicates the number of persons out of 20 who found the tomato juice containing the Flavor Enhancing Seasoning preferable or better)

| | A''' | B''' | C''' | D''' | $D_I$''' |
|---|---|---|---|---|---|
| Strength of "Umami" | 13 | 15* | 18*** | 16** | 15* |
| Strength of Characteristic Sweetness | 14 | 15* | 17** | 14 | 17** |
| Strength of Flavor Enhancement | 15* | 17** | 18*** | 18*** | 18*** |
| Preference | 15* | 18*** | 18*** | 18*** | 18*** |
| Remarks | | | Acid taste weakened<br>Strong tomato-like taste | Acid taste weakened<br>Strong tomato-like taste | Same as the left |

Table 39

Flavor Enhancing Seasonings

| | E''' | F''' | G''' | H''' | I''' | J''' | K''' | L''' | M''' | N''' | O''' |
|---|---|---|---|---|---|---|---|---|---|---|---|
| HVP | 60 | 60 | 60 | 60 | -- | -- | -- | -- | 30 | 15 | 15 |
| HAP | -- | -- | -- | -- | -- | -- | 60 | 60 | 15 | 15 | 30 |
| YE | -- | -- | -- | -- | 60 | 60 | -- | -- | 15 | 30 | 15 |
| MSG | 26 | 26 | 26 | 26 | 26 | 26 | 26 | 26 | 26 | 26 | 26 |
| IMP | 1 | 1 | 1 | 1 | 0 | 0 | 1 | 1 | 2 | 2 | 2 |
| GMP | 1 | 1 | 1 | 1 | 2 | 2 | 1 | 1 | 0 | 0 | 0 |
| 2Na Tartrate | 2 | 2 | 2 | 2 | -- | -- | 2 | 2 | 2 | 2 | 2 |
| NaCl | 10 | 10 | 10 | 10 | -- | -- | 10 | 10 | 10 | 10 | 10 |
| MMS | 1.7 | 8.3 | 16.7 | 33.3 | 1.5 | 30 | 1.7 | 33.3 | 16.7 | 16.7 | 16.7 |

All by parts by weight.

Table 40

N = 10

| | E''' | F''' | G''' | H''' | I''' | J''' | K''' | L''' | M''' | N''' | O''' |
|---|---|---|---|---|---|---|---|---|---|---|---|
| "Umami" Strength | ± | ± | ± | ± | ± | ± | ± | ± | ± | ± | ± |
| Characteristic Sweetness | + | + | ++ | +++ | + | +++ | ++ | ++++ | +++ | +++ | +++ |
| Flavor Enhancement | ++ | +++ | ++++ | +++++ | +++ | ++++ | +++ | ++++ | ++++ | ++++ | ++++ |

Flavor Enhancement Seasonings E''' to O''' were prepared according to the formulations given in Table 39. (The tastiness strength, y value was adjusted to 3.8). Using each aqueous solution, organoleptic evaluations were conducted similarly to Example 17 by a paired comparison test using a control to which MMS had not been added.

The results are given in Table 40.

Example 19

Formulations consisting of 10 parts by weight of "Ajieki" (produced by Ajinomoto Co. Inc.), 0.1 part by weight of sodium succinate, 0.5 part by weight of 50% lactic acid, 0.5 part by weight of table salt and 1 part by weight of sugar were dissolved in 100 ml of water respectively, and 0.5 part by weight of Flavor Enhancing Seasonings G and O obtained in Example 2 were prepared. Controls were similarly prepared omitting the Flavor Enhancing Seasonings.

500 g of green asparagus was added to 500 ml of each of the seasoned solutions obtained by adding Flavor Enhancing Seasoning G and its control respectively. After boiling in a conventional manner, the green asparagus were subjected to organoleptic evaluation by a paired comparison test. Further, an equal amount of corn was added to 500 ml of each of the seasoned solutions obtained by similarly adding Flavor Enhancing Seasoning O and its control respectively. After boiling in the conventional manner, these sample solutions were subjected to organoleptic evaluation by a paired comparison test. The results are as given in Table 41, in which the Flavor Enhanced products (those products to which Flavor Enhancing Seasonings G and O were added) were superior to the respective controls in the impartation of flavor, characteristic sweetness and in preference.

Table 41

N = 20

| | Green Asparagus | | Sweet Corn | |
|---|---|---|---|---|
| | Control Section | G Added Section | Control Section | O Added Section |
| Strength of Tastiness | 12 | 18 | 11 | 9 |
| Strength of Characteristic Sweetness | 5 | 15 * | 4 | 16 ** |
| Strength of Flavor Enhancement | 4 | 16 ** | 3 | 17 ** |
| Preference | 4 | 16 ** | 4 | 16 ** |

* Significantly different at a risk factor of 5%.

** Significantly different at a risk factor of 1%.

Example 20

Corn cream soup was prepared according to the formulation outlined below. Then 80 g of this formulation was fixed with 500 ml of cold water and, after boiling, organoleptically evaluated for the strength of flavor, vegetable-like taste and preference by a paired comparison test against a control formulation which had no added MMS. These evaluations reveal that, as shown in Table 42, the formulation with added MMS had a stronger flavor and was significantly favored for vegetable-like tastiness and total taste.

Formulation for Corn Cream Soup

| | | |
|---|---|---|
| Edible oil | 27 | Parts by weight |
| Flour | 18 | " |
| Dried onion flakes | 12 | " |
| Skimmed milk | 12 | " |
| Corn powder | 15 | " |
| Table salt | 10 | " |
| Onion powder | 4 | " |
| MSG | 1 | " |
| IMP | 0.5 | " |
| White pepper | 0.5 | " |
| MMS | 1.0 | " |

Table 42

N = 20

| | Control Section | MMS Added Section |
|---|---|---|
| Strength of Flavor Enhancement | 4 | 16 * |
| Vegetable-like Tastiness | 4 | 16 * |
| Preference | 4 | 16 * |

* Significantly different at a risk factor of 5%.

Example 21

A sea-urchin egg "Nerium" paste was prepared according to the formulation outlined below. This paste was organoleptically evaluated for strength of flavor, characteristic sweetness and total preference by a pair comparison test method. This evaluation, shown in Table 43 demonstrates that the formulations having added MMS flavor and was significantly favored as compared with the control (MMS not added).

Formulation for Sea Urchin Egg Paste

| | | |
|---|---|---|
| Raw material sea urchin egg | 5 | Parts by weight |
| Powdered egg | 1 | " |
| Alcohol | 0.8 | " |
| MSG | 0.4 | " |
| Glycine | 0.4 | " |
| Methionine | 0.1 | " |
| β-Carotin | q.s. | " |
| Water | 22.3 | " |
| MMS | 0.3 | " |

Table 43

N = 20

| | Control Section | MMS Added Section |
|---|---|---|
| Strength of Sweetness | 6 | 14 |
| Strength of Flavor Enhancement | 3 | 17 ** |
| Preference | 5 | 15 ** |

* Significantly different at a risk factor of 5%.

** Significantly different at a risk factor of 1%.

Example 22

A seaweed composition for rice to be eaten with hot green tea "Uchazuke" was prepared according to the formulation shown below. 8 g of the prepared composition was placed on top of boiled rice and hot green tea was poured to prepare rice and seaweed doused in hot green tea. The composition was then organoleptically evaluated for strength of flavor and total preference by a pair comparison test method using a control to which no MMS had been added. These evaluations as shown in Table 44, the MMS added section had stronger flavor and was significantly favored.

Formulation for Seaweed Composition For Rice with Hot Green Tea

| | | |
|---|---|---|
| Tangle powder | 0.5 | Parts by weight |
| Powdered tea | 2.0 | " |
| Sugar | 3.0 | " |
| Table salt | 53.0 | " |
| "Ajinomoto" | 10.0 | " |
| Glycine | 3.0 | " |
| Shredded seaweed | 5.0 | " |
| Rice cake pellets | 5.0 | " |
| MMS | 0.5 | " |

Table 44

N = 20

| | Control Section | MMS Added Section |
|---|---|---|
| Strength of Flavor Enhancement | 4 | 16 ** |
| Preference | 5 | 15 * |

Example 23

Table 45

| | Flavor Enhancing Seasoning | | | | |
|---|---|---|---|---|---|
| | A"" | B"" | C"" | D"" | E"" |
| MSG | 80 | 75 | 50 | 80 | -- |
| IMP | -- | 5 | -- | 3 | 30 |
| GMP | -- | -- | 10 | 3 | 30 |
| Cycloalliin | 20 | 20 | 40 | 14 | 40 |

The respective components outlined above were mixed to prepare Flavor Enhancing Seasonings A'''' to E''''. A product to which cycloalliin had not been added was used as a control in each case. Aqueous solutions containing 0.4 g/dl of the respective samples were prepared, and organoleptical evaluation was conducted by a pair comparison test method. The results are given in Table 46.

Table 46

| | A"" | B"" | C"" | D"" | E"" |
|---|---|---|---|---|---|
| Strength of "Umami" | + | ++ | ++++ | +++ | ± |
| Strength of Flavor Enhancement | ++ | +++ | ++++ | +++ | +++ |

Example 24

Table 47

Formulations of Flavor Enhancing Seasonings F"" - K ""

(parts by weight)

| | F"" | G"" | H"" | I"" | J"" | K"" |
|---|---|---|---|---|---|---|
| HVP | 60 | 60 | 60 | 60 | -- | -- |
| HAP | -- | -- | -- | -- | 60 | 60 |
| MSG | 26 | 26 | 26 | 26 | 26 | 26 |
| IMP | 1 | 1 | 1 | 1 | 1 | 1 |
| GMP | 1 | 1 | 1 | 1 | 1 | 1 |
| 2Na Succinate | 2 | 2 | 2 | 2 | 2 | 2 |
| NaCl | 10 | 10 | 10 | 10 | 10 | 10 |
| Cycloalliin | 1.7 | 8.7 | 16.7 | 33.3 | 1.7 | 33.3 |

The respective components outlined above were mixed to prepare Flavor Enhancing Seasonings F'''' to K''''. Using, as each control a product from which the cycloalliin had been omitted, organoleptic evaluations were conducted similarly as outlined in Example 23 by a pair comparison test method. The results are given in Table 48.

Table 48

| | Control | F"" | G"" | H"" | I"" | J"" | K"" |
|---|---|---|---|---|---|---|---|
| Concentration (g/dl) | 0.6 | 0.61 | 0.65 | 0.7 | 0.8 | 0.61 | 0.8 |
| Strength of "Umami" | ± | ± | ± | ± | ± | ± | ± |
| Strength of Flavor Enhancement | ± | + | ++ | +++ | +++ | + | +++ |

Example 25

Consomme soups were prepared according to formulations outlined below. These were organoleptically evaluated for the strength of flavor and total preference, to find that the consomme soup to which Flavor Enhancing Seasoning H'''' had been added had stronger flavor and was significantly favored as compared with the control.

Recipe for Consomme Soup

| | |
|---|---|
| Consomme soup stock (10 g of shavings of dried bonito) | 1000 ml |
| Soy sauce | 3 ml |
| Table salt | 6.5 g |
| Flavor Enhancing Seasoning of Example 24 (or Control Section in Example 24) | 0.6 g |

Table 49

| | Control Added Section | Flavor Enhancing Seasoning H" Added Section |
|---|---|---|
| Strength of Flavor | 4 | 16 ** |
| Preference of Flavor | 5 | 15 * |

** Significantly different at a risk factor of 1%.
* Significantly different at a risk factor of 5%.

Example 26

Chinese noodle soup was prepared using the formulation outlined below. The soup was then organoleptically evaluated for the strength of flavor and total preference by a pair comparison test method. This evaluation shows that the Chinese noodle soup to which Flavor Enhancing Seasoning H'''' had been added had stronger flavor and was significantly favoured as compared with the control.

Formulation of Chinese Noodle Soup

| | | |
|---|---|---|
| Soy sauce | 40 | Parts by weight |
| Table salt | 16 | " |
| Lard | 24 | " |
| Sesame Oil | 2 | " |
| "Ajimate" | 2 | " |
| YE | 1 | " |
| Vegetable extract | 8 | " |
| Flavor Enhancing Seasoning in Example 24 (or Control in Section 7 in Example 24) | 7 | " |

Table 50

N = 20

| | Control Section | Flavor Enhancing Seasoning H" Added Section |
|---|---|---|
| Strength of Flavor | 4 | 16 ** |
| Total Preference | 5 | 15 * |

** Significantly different at a risk factor of 1%.

* Significantly different at a risk factor of 5%.

Experimental Example 9

(Evaluation in Simple Aqueous Solution Systems)

Using as a control a mixed aqueous solution of 0.05 g/dl of MSG and 0.05 g/dl of IMP (y value = 3.09), sample solutions were prepared by adding 0.002 to 0.5 g/dl of alliin to portions of the mixed aqueous solution. These sample solutions were then organoleptically evaluated by paired comparison test against the control using an organoleptic panel of 20 members (N = 20). The results are given in Table 51.

Table 51

| | | Formulation | | | Taste Intensifying Effect | |
|---|---|---|---|---|---|---|
| | | MSG. g/dl | IMP g/dl | Alliin g/dl | Strength of "Umami" | Strength of Flavor Enhancement |
| Control | | 0.05 | 0.05 | -- | ± | ± |
| Sample | AA | " | " | 0.002 | ± | ± |
| | BB | " | " | 0.02 | ± | + |
| | CC | " | " | 0.05 | ± | ++ |
| | DD | " | " | 0.1 | + | +++ |
| | EE | " | " | 0.3 | ± | ++++ |
| | FF | " | " | 0.5 | ± | +++++ |
| | GG | -- | 0.1 | 0.1 | - | +++ |

As shown in Table 50, with the amount of added alliin less than 0.1% based on the y value (MSG calculated amount), the strength of flavor is comparable to that of the control. But by the addition of 0.1% or more, the flavor alone is remarkably increased without changing the strength of "Umami". If the absolute concentration of alliin exceeds 1.0%, a specific thickness in taste is manifested and the total taste balance is lost. Therefore, the amount of alliin added should suitably be in the range of 0.1 to 1000% by weight, preferably 0.1 to 500% by weight, based on the weight of co-present component calculated as the weight of MSG having the same "Umami" strength. Further, alliin manifests the most preferred effect in the presence of an appropriate amount of the above "Umami" component, that is, when the above y value is 0.1 to 30 as the concentration at the time of eating.

When a nucleic acid type taste intensifying substance is used alone, if alliin is added at a ratio of less than 1/99 to the nucleic acid type taste intensifying substance, the flavor enhancing effect is not adequate. Whereas if this ratio exceeds 99/1, specific thickness in taste is brought about and the total taste balance is lost.

Experimental Example 10

(Evaluation in Garlic Extract Systems)

The effect of the addition of alliin to a formulation of major components of garlic extract was evaluated by paired comparison test against a control which contained no alliin. The results are given in Table 53, from which it has been confirmed that alliin imparts a higher natural taste by the manifestation of strong flavor with synthetic garlic extract.

Table 52

Formulation of Major Components of Garlic Extract

| | Formulation |
|---|---|
| Asp | 3.6 % |
| Glu | 3.3 |
| Lys | 6.1 |
| Arg | 42.3 |
| Other amino acids * | 18.7 |
| NaCl | 19.7 |
| KCl | 6.7 |
| Citric acid | 0.1 |
| Succinic acid | 0.1 |
| | 100 |

* Ser, Val and Pro

Table 53

| | Major Components g/dl | Alliin g/dl | Strength of Flavor | Strength of Natural Taste |
|---|---|---|---|---|
| Control | 1.0 | 0 | ± | - |
| Sample AA | " | 0.03 | + | ± |
| BB | " | 0.1 | ++ | + |
| CC | " | 0.3 | +++ | ++ |

Alliin in this invention may be that obtained by any production process, such as an extraction process, a synthesis process etc. Further, it is also possible to replace the whole or part of the required alliin by a substance containing alliin at a relatively high concentration, for example, garlic extract, onion extract or other alliin extract.

Experimental Example 11

(Comparison of Taste Intensifying Powers of Representative Compounds)

Using as a control a mixed aqueous solution of 0.05 g/dl of MSG and 0.05 g/dl of IMP (y value = 3.09), sample solutions were prepared by adding 0.1 g/dl of the respective sample compounds shown in Table 52 to the mixed solutions. These sample solutions were evaluated by a paired comparison test by an organoleptic panel consisting of 20 members (N = 20). The results are shown in Table 54.

Table 54

(N = 20)

| | | "Umami" | Flavor |
|---|---|---|---|
| (1) | Control | ± | ± |
| (2) | S-Methylcysteinesulfoxide | ± | +++ |
| (3) | S-Ethylcysteinesulfoxide | ± | ++ |
| (4) | S-Propylcysteinesulfoxide | ± | ++ |
| (5) | S-Propenylcysteinesulfoxide | ± | +++ |
| (6) | γ-Glutamylcysteine | ± | + |
| (7) | γ-Glutamyl-S-methylcysteine | ± | + |
| (8) | γ-Glutamyl-S-ethylcysteine | ± | + |
| (9) | γ-Glutamyl-S-propylcysteine | ± | + |
| (10) | γ-Glutamyl-S-propenylcysteine | ± | + |
| (11) | γ-Glutamyl-S-allylcysteine | ± | ++ |
| (12) | γ-Glutamyl-S-methylcysteinesulfoxide | ± | ++ |
| (13) | γ-Glutamyl-S-ethylcysteinesulfoxide | ± | ++ |
| (14) | γ-Glutamyl-S-propylcysteinesulfoxide | ± | +++ |
| (15) | γ-Glutamyl-S-propenylcysteinesulfoxide | ± | +++ |
| (16) | γ-Glutamyl-S-allylcysteinesulfoxide | ± | +++ |
| (17) | S-(2-Carboxypropyl)glutathione | ± | ++ |
| (18) | S-(2-Carboxy-2-methylethyl)glutathione | ± | ++ |

Experimental Example 12

Using the same mixed aqueous solution of MSG and IMP as that used in Experimental Example 11 as a control, samples were prepared by adding thereto 0.001 to 1.0 g/dl of the sample compounds outlined in Table 54. Aqueous solutions of 0.1 g/dl of IMP and 0.1 g/dl of the respective sample compounds outlined in Table 54 were also prepared as samples. All of these were evaluated by a pair comparison test method against a control by an organoleptic panel consisting of 20 members (N = 20). Some of the results are given in Table 55 (the case of γ-glutamyl-S-allylcysteinesulfoxide).

Table 55

| | Formulation | | | Taste Intensifying Effect | |
|---|---|---|---|---|---|
| | MSG g/dl | IMP g/dl | Compound No. 16 in Experimental Example 11 g/dl | Strength of "Umami" | Strength of Flavor |
| Control | 0.05 | 0.05 | — | ± | ± |
| Sample AA | " | " | 0.002 | ± | ± |
| BB | " | " | 0.01 | ± | + |
| CC | " | " | 0.05 | ± | ++ |
| DD | " | " | 0.10 | + | +++ |
| EE | " | " | 0.50 | ± | +++ |
| FF | " | " | 1.00 | ± | +++ |
| GG | -- | 0.1 | 0.10 | - | ++ |

As shown in Table 55, with an added amount of less than 0.1% based on the y value (MSG calculated amount), the strength of flavor is unchanged. However, with the addition of 0.1% or more, the flavor is remarkably increased. In this case, if the absolute concentration of this compound (compound No. 16 of Experimental Example 11) exceeds 1.0%, specific thickness in taste is manifested and the total taste balance is lost. Therefore, the amount of this compound added should suitably be in the range of 0.1 to 1000% by weight, preferably 0.1 to 50% by weight, based on the co-present "Umami" component calculated as the weight of MSG having the same "Umami" strength. Further, the compound manifests the most preferred effect in the presence of an appropriate amount of the above "Umami" component, that is, when the above y value is 0.1 to 30 as the concentration at the time of eating. The above fact likewise applies to the other compounds of the general formulae (1) and (2).

On the other hand, in the case where the nucleic acid type taste intensifying substance is used alone, if compound (1) or (2) is added in an amount of less than 1/99 at the ratio to the nucleic acid type taste intensifying substance, the flavor enhancing effect is not adequate. Whereas if this ratio exceeds 99/1, a specific thickness in taste is brought about and the total taste balance is lost. This also applies to the other compounds of the general formulae (1) and (2).

Experimental Example 13

(Evaluation in Garlic Extract Systems)

Each compound set forth in Table 54 was added to a formulation comprising major components of garlic extract (set forth in Table 55). The compositions were evaluated by a paired comparison test using a control which contained no addition of compounds of Table 54. The results are given in Table 57 from which it has been confirmed that also in the formulated garlic extract, these compounds impart a higher natural flavor.

Table 56

Formulation of Major Components in Garlic Extract

| | Formulation |
|---|---|
| Asp | 3.6 % |
| Glu | 3.3 |
| Lys | 6.1 |
| Arg | 42.3 |
| Other amino acids* | 18.7 |
| NaCl | 19.4 |
| KCl | 6.7 |
| Citric acid | 0.1 |
| Succinic acid | 0.1 |

* Ser, Val, Pro

Table 57

| Compound Added | Concentration of Formulated Extract (g/dl) | Concentration of Compound Added (g/dl) | Strength of Flavor Enhancement | Strength of Natural Flavor |
|---|---|---|---|---|
| (1) Control | 1.0 | 0 | ± | - |
| (2) S-Methylcysteine-sulfoxide | " | 0.1 | ++ | + |
| (3) S-Ethylcysteine-sulfoxide | " | 0.1 | + | + |
| (4) S-Propylcysteine-sulfoxide | " | 0.1 | ++ | + |
| (5) γ-Glutamyl-cysteine | " | 0.1 | + | ± |
| (6) γ-Glutamyl-S-allylcysteine | " | 0.1 | ++ | + |
| (7) γ-Glutamyl-S-methylcysteine | " | 0.1 | ++ | + |
| (8) γ-Glutamyl-S-methylcysteine | " | 0.1 | + | ± |
| (9) γ-Glutamyl-S-propylcysteine | " | 0.1 | + | ± |
| (10) γ-Glutamyl-S-propenyl-cysteinesulfoxide | " | 0.1 | ++ | + |
| (11) γ-Glutamyl-S-allylcysteine-sulfoxide | " | 0.03 | + | + |
| (12) γ-Glutamyl-S-allylcysteine sulfoxide | " | 0.1 | ++ | ++ |
| (13) γ-Glutamyl-S-allylcysteine-sulfoxide | " | 0.3 | +++ | ++ |

The compounds of the general formulae (1) and (2) may be used singly or as a mixture of two or more. They can also be wholly or partially replaced by substances which contain considerably high concentrations of these compounds, such as garlic extract (preferably, extract from which the odor components have been removed by deodorizing process e.g. the processed described in Japanese Patent Application No. 82169/1983), onion extract etc. Similarly, the "Umami" components such as glutamic acid, nucleic acid type tastiness substances etc. can also be wholly or partially replaced by "Umami" components contained in the food or seasoning *per se* to which these compounds are to be added.

Examples of the "Umami" component which may be used in this invention include, in addition to MSG, IMP, GMP etc., any component having a "Umami" imparting effect. Some of these are: potassium glutamate, calcium glutamate, potassium 5'-inosinate, calcium 5'-inosinate, potassium 5'-guanylate, calcium 5'-guanylate etc. and any food or seasoning which contains said "Umami" components as one of

its constituting components; for example, protein hydrolysates (HAP, HVP), yeast extract, meat extract, vegetable extract etc.

The Flavor Enhancing seasonings of this invention may be prepared by any process, for example, by merely dry blending MSG, IMP, GMP etc. with these compounds by pelletizing them using an appropriate excipient, etc. Similarly, for the production of food having enhanced flavor according to this invention, the actual manner for the production of the food is not limited as along as the "Umami" components and these compounds are co-present in the final product at the above-described mixing ratio.

In addition, it is needless to say that the use in combination of seasonings, for example, salty taste agents such as table salt, potassium chloride etc., sweetening agents such as sugar etc., acid taste agents such as organic acids etc., flavors, spices, quality modifiers etc. may be possible unless it departs from the object of this invention.

This invention is more particularly described by the following examples.

Example 27

Table 58

| | Flavor Enhancing Seasoning | | | | |
|---|---|---|---|---|---|
| | AA | BB | CC | DD | EE |
| MSG | 80 | 75 | 50 | 80 | |
| IMP | | 5 | | 3 | 30 |
| GMP | | | 10 | 3 | 30 |
| S-Methylcysteine-sulfoxide | 20 | 20 | 40 | 14 | 40 |

Of the compounds of the general formulae (1) and (2), the exemplary case of S-methylcysteinesulfoxide is set forth in Table 58. According to this formulation, the respective components were mixed to prepare Flavor Enhancing Seasonings AA to EE. As each control, a product to which S-methylcysteinesulfoxide had not been added was used. Aqueous solutions containing 0.4 g/dl of the respective sample compounds (outlined in Table 57) and solutions obtained by adding 0.1% by weight of the sample compounds to commercial consomme soup were prepared. An organoleptic evaluation was conducted by a paired comparison test. The results are given in Table 59 and Table 60.

Table 59

| | AA | BB | CC | DD | EE |
|---|---|---|---|---|---|
| Strength of "Umami" | + | ++ | ++++ | +++ | ± |
| Strength of Flavor | ++ | +++ | +++ | +++ | +++ |

Table 60

Evaluation When Added to Commercial Consomme Soup

N = 20

| | AA | BB | CC | DD | EE |
|---|---|---|---|---|---|
| Strength of "Umami" | 12 | 16 ** | 18 *** | 17 ** | 15 * |
| Strength of Flavor | 13 | 15 * | 17 ** | 13 | 16 ** |
| Taste | 14 | 18 *** | 18 *** | 18 *** | 18 *** |

Each numeral in the table indicates the number of persons who have found it preferable or strong.

* Significantly different at a risk factor of 5%.

** Significantly different at a risk factor of 1%.

*** Significantly different at a risk factor of 0.5%.

Example 28

Table 61

Flavor Enhancing Seasonings

(parts by weight)

| | FF | GG | HH | II | JJ | KK |
|---|---|---|---|---|---|---|
| HVP | 60 | 60 | 60 | 60 | -- | -- |
| HAP | -- | -- | -- | -- | 60 | 60 |
| MSG | 26 | 26 | 26 | 26 | 26 | 26 |
| IMP | 1 | 1 | 1 | 1 | 1 | 1 |
| GMP | 1 | 1 | 1 | 1 | 1 | 1 |
| 2Na Succinate | 2 | 2 | 2 | 2 | 2 | 2 |
| NaCl | 10 | 10 | 10 | 10 | 10 | 10 |
| Sample Compound * | 1.7 | 8.3 | 16.7 | 33.3 | 1.7 | 33.3 |

* Mixture of equal amounts of S-methylcysteinesulfoxide, S-propenylcysteinesulfoxide, S-propylcysteinesulfoxide and γ-glutamyl-S-allylcycsteine-sulfoxide.

According to the above formulation, the respective components were mixed to prepare Flavor Enhancing Seasonings FF to KK. Using as each control a product to which the sample compound had not been added, organoleptic evaluation was conducted as outlined in Example 27 by a paired comparison test. The results are given in Table 62.

Table 62

| | Control | FF | GG | HH | II | JJ | KK |
|---|---|---|---|---|---|---|---|
| Concentration (g/dl) | 0.6 | 0.61 | 0.65 | 0.7 | 0.8 | 0.61 | 0.8 |
| Strength of "Umami" | ± | ± | ± | ± | ± | ± | ± |
| Strength of Flavor | ± | + | ++ | +++ | +++ | + | +++ |

Example 29

Chinese noodle soup was prepared using the formulation shown below, and organoleptically evaluated for strength of flavor and total preference by a paired comparison test. These evaluations show that the Chinese noodle soup to which Flavor Enhancing Seasoning HH had been added had stronger flavor and was significantly favored as compared with the control.

Formulation of Chinese Noodle Soup

| | |
|---|---|
| Soy sauce | 40 parts by weight |
| Table salt | 16 |
| Lard | 24 |
| Sesame oil | 2 |
| "Ajimate" | 2 |
| YE | 1 |
| Vegetable extract | 8 |
| Flavor Enhancing Seasoning in Example 28 (or Control Section in Example 28) | 7 |

Table 63

N = 20

| | Control Section | Flavor Enhancing Seasoning HH Added Section |
|---|---|---|
| Strength of Flavor | 4 | 16 ** |
| Total Preference | 5 | 15 * |

** Significantly different at a risk factor of 1%.

* Significantly different at a risk factor of 5%.

Example 30

Table 64

| | LL | MM | NN | OO | PP |
|---|---|---|---|---|---|
| MSG | 80 | 75 | 50 | 80 | -- |
| IMP | -- | 5 | -- | 3 | 30 |
| GMP | -- | -- | 10 | 3 | 30 |
| Alliin | 20 | 20 | 40 | 14 | 40 |

The respective components outlined in the above formulations were mixed to prepare Flavor Enhancing Seasonings LL to PP. As each control, a product to which alliin had not been added was used. Aqueous solutions containing 0.4 g/dl of the respective formulations and solutions obtained by adding 0.1% by weight of the above formulations to commercial consomme soup were prepared. Organoleptical evaluations were conducted by a paired comparison test. The results are given in Table 65 and Table 66.

Table 65

| | LL | MM | NN | OO | PP |
|---|---|---|---|---|---|
| Strength of Tastiness | + | ++ | ++++ | +++ | ± |
| Strength of Flavor | +++ | ++++ | +++++ | ++++ | ++++ |

Table 66

Evaluation When Added to Commercial Consomme Soup

N = 20

(Each numeral indicates the number of persons out of 20 who have found it preferable or strong).

| | LL | MM | NN | OO | PP |
|---|---|---|---|---|---|
| Strength of "Umami" | 12 | 16 ** | 18 *** | 17 ** | 15 ** |
| Strength of Flavor | 13 | 15 * | 17 ** | 13 | 16 ** |
| Taste | 14 | 18 *** | 18 *** | 18 *** | 18 *** |
| Comment | | | Aftertaste Strong, Flavor Strong & Preferred | Aftertaste Strong, Flavor Strong & Preferred | |

* Significantly different at a risk factor of 5%.

** Significantly different at a risk factor of 1%.

*** Significantly different at a risk factor of 0.5%.

Example 31

Table 67

Formulations of Flavor Enhancing Seasonings QQ to VV

(parts by weight)

| | QQ | RR | SS | TT | UU | VV |
|---|---|---|---|---|---|---|
| HVP | 60 | 60 | 60 | 60 | - | - |
| HAP | -- | -- | -- | -- | 60 | 60 |
| MSG | 26 | 26 | 26 | 26 | 26 | 26 |
| IMP | 1 | 1 | 1 | 1 | 1 | 1 |
| GMP | 1 | 1 | 1 | 1 | 1 | 1 |
| 2Na Succinate | 2 | 2 | 2 | 2 | 2 | 2 |
| NaCl | 10 | 10 | 10 | 10 | 10 | 10 |
| Alliin | 1.7 | 8.7 | 16.7 | 33.3 | 1.7 | 33.3 |

The respective components outlined in the above formulations were mixed to prepare Flavor Enhancing Seasonings QQ to VV. Using, as each control, a product from which the alliin had been omitted, organoleptic evaluation was conducted as outlined in Example 30 by a paired comparison test. The results are given in Table 68.

Table 68

| | Control | QQ | RR | SS | TT | UU | VV |
|---|---|---|---|---|---|---|---|
| Concentration (g/dl) | 0.6 | 0.61 | 0.65 | 0.7 | 0.8 | 0.61 | 0.8 |
| Strength of Umami | ± | ± | ± | ± | ± | ± | ± |
| Strength of Flavor | ± | ++ | +++ | +++++ | +++++ | +++++ | +++++ |

Example 32

Using the following recipe, spaghetti meat sauce was prepared and strength of Flavor and total preference were organoleptically evaluated by paired comparison test. These evaluations, as shown in Table 68, demonstrate that meat sauce to which Flavor Enhancing Seasoning SS had been added had stronger flavor and was significantly favored as compared with the control.

Recipe for Meat Sauce

| | |
|---|---|
| Minced beef and pork | 15.7 |
| Onion | 39.2 |
| Carrot | 4.7 |
| Corn salad oil | 7.8 |
| Flour | 7.8 |
| Tomato ketchup | 15.7 |
| Tomato puree | 4.7 |
| Worcestershire sauce | 3.8 |
| Flavor Enhancing seasoning of Example 31 (or Control Section in Example 31) | 0.6 |

Table 69

N = 20

| | Control Added Section | Flavor Enhancing Seasoning SS Added Section |
|---|---|---|
| Strength of Flavor | 4 | 16 ** |
| Total Preference | 5 | 15 ** |

** Significantly different at a risk factor of 1%.

* Significantly different at a risk factor of 5%.

Example 33

Barbecue sauce was prepared from refined spices, soybean oil, soy sauce, soybean paste (miso), granulated sugar, MSG, starch, synthesized rice wine (sake) and guar gum according to the recipe outlined below. The strength of flavor and taste were organoleptically evaluated by a paired comparison test using a sample to which alliin had not been added as a control. As shown in Table 70 the alliin added section had strong flavor and was significantly favored for the total taste.

Recipe for Barbecue Sauce

| | | |
|---|---|---|
| Spices | 12.5 Parts by weight | |
| Refined soybean oil | 25 | " |
| Soy sauce | 34 | " |
| Soybean paste (miso) | 9 | " |
| Granulated sugar | 8 | " |
| MSG | 1 | " |
| Starch | 1 | " |
| Synthesized rice wine (sake) | 9 | " |
| Guar gum | 0.1 | " |
| Alliin | 0.5 | " |

Table 70

| | Control Section | Alliin Added Section |
|---|---|---|
| Strength of Flavor | 4 | 16 ** |
| Total Taste | 4 | 16 ** |

Example 34

Hamburgers were prepared as outlined in Table 70 using 30 parts of pork, 15 parts of chicken, 5 parts of beef, 4 parts of bread crumb, 2 parts of "AJIPRON" (produced by Ajinomoto Co.), 4 parts of "SHIN-ESUSAN" starch (produced by Ajinomoto Co.), 17 parts of onion and 5 parts of each of Flavor Enhancing Seasonings WW, XX and YY. Controls were prepared according to the same formulations but without the Flavor Enhancing Seasonings. These hamburgers were organoleptically evaluated to find as shown in Table 72 that the hamburgers to which Flavor Enhancing Seasonings WW, XX and YY had been added respectively had stronger flavor and were significantly favored as compared with that to which the control had been added.

Table 71

Formulations of Flavor Enhancing Seasonings W, X and Y

| | WW | XX | YY |
|---|---|---|---|
| Table salt | 8 | 8 | 8 |
| Soy sauce | 40 | 40 | 40 |
| Sugar | 8 | 8 | 8 |
| (Ajinomoto Co.) | 8 | 8 | 8 |
| Wine | 10 | 10 | 10 |
| MSG | 10 | 10 | 10 |
| White pepper | 6 | 6 | 6 |
| Nutmeg | 4 | 4 | 4 |
| Ginger | 6 | 6 | 6 |
| Alliin | 2 | 10 | 20 |

Table 72

| | Control Added Section | WW Added Section | XX Added Section | YY Added Section |
|---|---|---|---|---|
| Strength of Flavor | ± | + | +++ | +++++ |
| Preference | + | ++ | ++++ | +++ |

Example 35

Mix Vegetable Extracts WW', XX' and YY' prepared in a conventional manner using the formulations of Table 73. These were evaluated in Chinese noodle soup to find as shown in Table 74 that the Chinese noodle soup to which the mix vegetable extracts had been added respectively had stronger flavor and each was significantly favored as compared with control which contained no mix vegetable extract.

Table 73

Formulations of Mix Vegetable Extracts WW', XX' and YY'

| | Control | WW' | XX' | YY' |
|---|---|---|---|---|
| Onion | 60 | 60 | 60 | 60 |
| Garlic | 30 | 30 | 30 | 30 |
| Leek | 5 | 5 | 5 | 5 |
| Carrot | 5 | 5 | 5 | 5 |
| Alliin | -- | 5 | 10 | 15 |

Recipe for Chinese Noodle Soup

| | | |
|---|---|---|
| Soy sauce | 40 | Parts by weight |
| Table salt | 16 | " |
| Lard | 24 | " |
| Sesame oil | 2 | " |
| WP | 1 | " |
| "Ajinomoto" | 6 | " |
| "Ajimate" | 2 | " |
| YE | 1 | " |
| Aforesaid Mix Vegetable Extract | 8 | " |

Table 74

| | Control | WW' | XX' | YY' |
|---|---|---|---|---|
| Strength of Flavor | ± | + | ++ | ++++ |
| Preference | + | ++ | ++++ | ++++ |

**Claims**

1. A composition comprising:
i) a taste intensifying umami substance; and
ii) a flavour enhancing substance which is at least one member selected from glutathione, salts of glutathione, oxidized glutathione, salts of oxidized glutathione, glutathione sulfonic acid, salts of glutathione sulfonic acid, cycloalliin, salts of cycloalliin, lenitinic acid, salts of lentinic acid, des-glutamyl lentinic acid, salts of des-glutamyl lentinic acid, methionine methyl sulfonium, salts of methionine methyl sulfonium compounds of the formulae

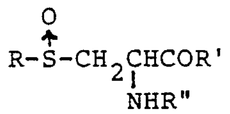

(1)

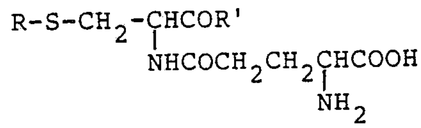

(2)

wherein
R is a saturated or unsaturated aliphatic hydrocarbon group of from 1 to 4 carbon atoms or a carboxyalkyl group wherein said alkyl is from 1 to 6 carbon atoms; or, in formula (2), H when R′ is OH,
R′ is OH, a carboxymethyl amino group or a salt of a carboxymethyl amino group, and
R″ is H, a γ-glutamyl group or a salt of a γ-glutamyl group,
salts of compound (1) and salts compound (2), wherein the taste intensifying umami substance and the flavour enhancer are present in relative amounts such that a synergistic effect occurs between the two substances to enhance flavour intensity.

2. The composition of Claim 1 wherein said taste intensifying Umami substance comprises glutamic acid, a salt of glutamic acid or a mixture thereof.

3. The composition of Claim 2 wherein said flavor enhancing substance is used in an amount in the range of 0.1 to 1000% by weight based on the weight of said taste intensifying substance.

4. The composition of Claim 3 wherein said taste intensifying substance Umami is used in an amount sufficient to obtain an adequate taste intensifying strength.

5. The composition of Claim 1 wherein said taste intensifying Umami substance comprises a nucleic acid or a salt of a nucleic acid.

6. The composition of Claim 5 wherein said taste intensifying Umami substance comprises 5′-inosinate, a salt of 5′-inosinate, 5′-guanylate, a salt of 5′-guanylate or a mixture thereof.

7. The composition of Claim 5 wherein said flavor enhancing substance is used in an amount in weight ratio of 1:99 to 99:1 relative to said taste intensifying substance.

8. The composition of Claim 1 wherein said taste intensifying Umami substance comprises glutamic acid or a salt of glutamic acid, said taste intensifying Umami substance further comprising at least one member selected from 5′-inosinate, a salt of 5′-inosinate, 5′-guanylate and a salt of 5′-guanylate;
wherein the taste intensifying strength of said substance is determined as follows:
i) for 5′-inosinate or a salt thereof:

$$y = u + 1218\,uv$$

ii) for 5′-guanylate or a salt thereof:

$$y = u + 2800\,uv;$$

wherein
y is the taste intensifying strength,
u is the glutamic acid or glutamic acid salt concentration expressed as a weight %,
v is the 5′-inosinate or 5′-inosinate salt concentration expressed as a weight %, or
v is the 5′-guanylate or 5′-guanylate salt concentration expressed as a weight %; and
y is in the range of 0.1 to 30 weight %.

9. A food which comprises the composition of any one of the preceding claims.

10. A food comprising the composition of any one of the claims 1 to 8 wherein said food comprises a pork sausage, tomato juice, Japanese sake, consomme soup, noodle soup, corn cream soup, soy sauce, soybean taste soup, Worcester sauce, seaweed boiled down in soy sauce, sea urchin egg paste, beef extract, shrimp extract, onion extract, curry, garlic extract or rice.

**Patentansprüche**

1. Zusammensetzung, enthaltend:

(i) eine geschmacksintensivierende Umami-Substanz und

(ii) eine aromaverstärkende Substanz, die mindestens ein aus der nachstehenden Gruppe ausgewähltes Mitglied ist: Glutathion, Salze von Glutathion, oxidiertes Glutathion, Salze von oxidiertem Glutathion, Glutathion-sulfonsäure, Salze von Glutathion-sulfonsäure, Cycloalliin, Salze von Cycloalliin, Lentinsäure, Salze von Lentinsäure, Desglutamyl-lentinsäure, Salze von Desglutamyl-lentinsäure, Methionin-methylsulfonium, Salze von Methionin-methylsulfonium, Verbindungen der Formeln

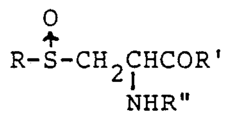

(1)

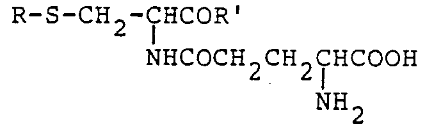

(2)

worin

R eine gesättigte oder ungesättigte aliphatische Kohlenwasserstoffgruppe mit 1 bis 4 Kohlenstoffatomen oder eine Carboxyalkylgruppe ist, worin der Alkylrest 1 bis 6 Kohlenstoffatome aufweist, oder, in Formel (2) H bedeutet, wenn R′ für OH steht,

R′ OH, eine Carboxymethylaminogruppe oder ein Salz einer Carboxymethylaminogruppe bedeutet und

R″ für H, eine γ-Glutamylgruppe oder ein Salz einer γ-Glutamylgruppe steht, Salze der Verbindung (1) und Salze der Verbindung (2), in der die geschmacksintensivierende Umami-Substanz und der Aromaverstärker in einem solchen Mengenverhältnis vorhanden sind, daß zwischen den beiden Substanzen ein synergistischer Effekt auftritt, der die Intensität des Aromas erhöht.

2. Zusammensetzung nach Anspruch 1, in der die geschmacksintensivierende Umami-Substanz Glutaminsäure, ein Salz der Glutaminsäure oder ein Gemisch davon umfaßt.

3. Zusammensetzung nach Anspruch 2, in der die aromaverstärkende Substanz in einer Menge im Bereich von 0,1 bis 1000 Gew.-%, bezogen auf das Gewicht der geschmacksintensivierenden Substanz, eingesetzt wird.

4. Zusammensetzung nach Anspruch 3, in der die geschmacksintensivierende Umami-Substanz in einer solchen Menge eingesetzt wird, die ausreicht, um eine geeignete Stärke der Geschmacksintensivierung zu erzielen.

5. Zusammensetzung nach Anspruch 1, in der die geschmacksintensivierende Umami-Substanz eine Nucleinsäure oder ein Salz einer Nucleinsäure umfaßt.

6. Zusammensetzung nach Anspruch 5, in der die geschmacksintensivierende Umami-Substanz 5′-Inosinat, ein Salz von 5′-Inosinat, 5′-Guanylat, ein Salz von 5′-Guanylat oder ein Gemisch davon darstellt.

7. Zusammensetzung nach Anspruch 5, in der die aromaverstärkende Substanz in einer Menge entsprechend einem Gewichtsverhältnis von 1:99 bis 99:1 bezogen auf die geschmacksintensivierende Substanz eingesetzt wird.

8. Zusammensetzung nach Anspruch 1, in der die geschmacksintensivierende Umami-Substanz Glutaminsäure oder ein Salz der Glutaminsäure umfaßt, die geschmacksintensivierende Umami-Substanz außerdem mindestens eine Verbindung, ausgewählt unter 5′-Inosinat, einem Salz von 5′-Inosinat, 5′-Guanylat und einem Salz von 5′-Guanylat umfaßt,

in der die Stärke der Geschmacksintensivierung durch diese Substanz wie folgt bestimmt wird:

i) für 5′-Inosinat oder ein Salz davon:

$$y = u + 1218\,uv$$

ii) für 5′-Guanylat oder ein Salz davon:

$$y = u + 2800\,uv;$$

worin

y die Stärke der Geschmacksintensivierung,

u die Konzentration der Glutaminsäure oder des Glutaminsäuresalze, angegeben in Gew.-%,

v die Konzentration an 5′-Inosinat oder einem 5′-Inosinat-Salz, angegeben in Gew.-%, oder

v die Konzentration an 5′-Guanylat oder einem 5′-Guanylat-Salz, angegeben in Gew.-%, bedeutet und

y im Bereich von 0,1 bis 30 Gew.-% liegt.

9. Nahrungsmittel, welches die Zusammensetzung nach einem der vorhergehenden Patentansprüche enthält.

10. Nahrungsmittel, welches die Zusammensetzung nach einem der Ansprüche 1 bis 8 enthält, wobei

das Nahrungsmittel Schweinefleischwurst, Tomatensaft, japanischer Sake, Consommé-Suppe, Nudelsuppe, Maiscremesuppe, Sojasauce, Suppe mit Sojabohnengeschmack, Worcestersauce, in Sojasauce gekochter Seetang, Paste von Seeigeleiern, Fleischextrakt, Krabbenextrakt, Zwiebelextrakt, Curry, Knoblauchextrakt oder Reis umfaßt.

**Revendications**

1. Une composition comprenant:
i) une substance umami intensifiant le goût; et
ii) une substance renforçant la saveur qui est au moins un composé choisi parmi le glutathion, les sels de glutathion, le glutathion oxydé, les sels de glutathion oxydé, l'acide glutathion-sulfonique, les sels d'acide glutathion-sulfonique, la cycloalliine, les sels de cycloalliine, l'acide lentinique, les sels d'acide lentinique, l'acide dé-glutamyl-lentinique, les sels d'acide déglutamyl-lentinique, le méthionine-méthylsulfonium, les sels de méthionine-méthylsulfonium, les composés de formules

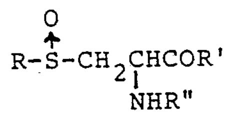
(1)

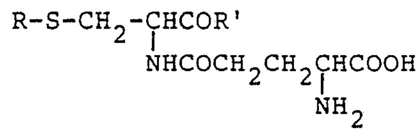
(2)

dans lesquelles
R est un groupe d'hydrocarbure saturé ou insaturé en $C_1$—$C_4$ ou un groupe carboxyalkyle, dans lequel ledit alkyle a de 1 à 6 atomes de carbone; ou bien, dans la formule (2), H lorsque R' est OH
R' est OH ou un groupe carboxyméthylamino ou un sel d'un groupe carboxyméthylamino, et
R'' est H, un groupe γ-glutamyle ou un sel d'un groupe γ-glutamyle, les sels des composés (1) et les sels des composés (2),
dans laquelle la substance umami intensifiant le goût et le renforçateur de saveur sont présents en quantités relatives telles qu'il y a entre les deux substances un effet synergique renforçant l'intensité de la saveur.

2. La composition selon la revendication 1, dans laquelle ladite substance Umami intensifiant le goût comprend l'acide glutamique, un sel d'acide glutamique ou un de leurs mélanges.

3. La composition selon la revendication 2, dans laquelle ladite substance renforçant la saveur est utilisée en quantités dans la gamme de 0,1 à 1000% en poids, par rapport au poids de ladite substance intensifiant le goût.

4. La composition selon la revendication 3, dans laquelle ladite substance Umami intensifiant le goût est utilisée en quantité suffisante pour obtenir une intensité appropriée d'intensification du goût.

5. La composition selon la revendication 1, dans laquelle ladite substance Umami intensifiant le goût comprend un acide nucléique ou un sel d'un acide nucléique.

6. La composition selon la revendication 5, dans laquelle ladite substance Umami intensifiant le goût comprend le 5'-inosinate, un sel de 5'-inosinate, le 5'-guanylate, un sel de 5'-guanylate ou un de leurs mélanges.

7. La composition selon la revendication 5, dans laquelle ladite substance renforçant la saveur est utilisée dans un rapport de 1:99 à 99:1 en poids par rapport à ladite substance intensifiant le goût.

8. La composition selon la revendication 1, dans laquelle ladite substance Umami intensifiant le goût comprend l'acide glutamique ou un sel d'acide glutamique, ladite substance Umami intensifiant le goût comprenant en outre au moins un composé choisi parmi le 5'-inosinate, un sel de 5'-inosinate, le 5'-guanylate et un sel de 5'-guanylate;
dans laquelle l'intensité d'intensification du goût de ladite substance est déterminée par les équations suivantes:

i) pour le 5'-inosinate ou son sel:

$$y = u + 1218\ uv$$

ii) pour le 5'-guanylate ou son sel:

$$y = u + 2800\ uv;$$

dans lesquelles
y est l'intensité d'intensification du goût,
u est la concentration d'acide glutamique ou de sel d'acide glutamique en % en poids,
v est la concentration de 5'-inosinate ou de sel de 5'-inosinate en % en poids, ou bien
v est la concentration en 5'-guanylate ou en sel de 5'-guanylate en % en poids; et
y est compris dans la gamme de 0,1 à 30% en poids.

9. Un aliment qui comprend la composition selon l'une quelconque des revendications précédentes.

10. Un aliment comprenant la composition selon l'une quelconque des revendications 1 à 8, caractérisé en ce que ledit aliment comprend une saucisse de porc, du jus de tomates, du saké japonais, de la soupe de consommé, de la soupe aux nouilles, de la soupe de crème de soja, de la sauce au soja, de la soupe au goût de soja, de la sauce Worcester, des algues réduites dans la sauce au soja, de la pâte aux oeufs d'oursin, de l'extrait de boeuf, de l'extrait de crevettes, de l'extrait d'oignon, du curry, de l'extrait d'ail ou du riz.